# EUROPÄISCHE PATENTANMELDUNG

(11) **EP 3 896 138 A1**
(43) Veröffentlichungstag der Anmeldung: **20.10.2021**
(21) Anmeldenummer: 21168272.9
(22) Anmeldetag: 14.04.2021
(51) Int. Cl.: C09K 11/06, C07F 15/00, C09K 11/02

(54) **VERWENDUNG VON D8-METALLKOMPLEXVERBINDUNGEN MIT LIGANDEN-KONTROLLIERTEN AGGREGATIONS- UND LUMINESZENZEIGENSCHAFTEN**

(30) Priorität: 15.04.2020 DE 102020110305
(71) Anmelder: Bundesanstalt für Materialforschung und -Prüfung (BAM), 12205 Berlin (DE); Westfälische Wilhelms Universität, 48149 Münster (DE)
(72) Erfinder: Dr. RESCH-GENGER, Ute, 12203 Berlin (DE); WANG, Cui, 10713 Berlin (DE); Prof. STRASSERT, Cristian Alejandro, 48163 Münster (DE); GUITERREZ SUBURU, Matias Ezequiel, 48155 Münster (DE); Dr. MAISULS, Ivan, 48149 Münster (DE)
(74) Vertreter: Maikowski & Ninnemann Patentanwälte Partnerschaft mbB

(57) **Zusammenfassung**

Die Erfindung betrifft molekulare Emitter auf Basis von d8-Metallkomplexverbindungen, wie Pd(II) Komplexe und Komplexe von anderen metallorganischen Verbindungen wie Pt(II), Au(III), Ag(III), Rh(I), Ir(I) usw., die unterschiedliche optische Eigenschaften, insbesondere eine unterschiedliche Lumineszenz (Farbe bzw. spektrale Lage der Emissionsbande, Intensität bzw. Lumineszenzeffizienz oder -quantenausbeute, Abklingzeit) als Monomer und als Aggregat aufweisen, sowie deren Verwendung in Prozessen, in denen über die Wechselwirkung mit einem Target die Umwandlung des Aggregationszustandes der d8-Metallkomplexverbindungen von Monomeren zu Aggregaten und umgekehrt unter Änderung der Farbe, Intensität und Lebensdauerdes emittierten Lichtes erfolgt. Die Erfindung stellt weiterhin neuartige d8-Metallkomplexverbindungen bereit, die die o.g. Eigenschaften aufweisen. In einem weiteren Aspekt betrifft die Erfindung Nano- und Mikropartikel, die mit d8-Metallkomplexverbindungen beladen sind, sowie ein Verfahren zur Herstellung solcher Nano- und Mikropartikel.

## Beschreibung

### Gebiet der Erfindung

Die Erfindung betrifft molekulare Emitter auf Basis von d8-Metallkomplexverbindungen, wie Pd(II) Komplexe und anderen metallorganische Verbindungen wie Pt(II), Au(III), Ag(III), Rh(I), Ir(I) usw., die unterschiedliche optische Eigenschaften, insbesondere eine unterschiedliche Lumineszenz (Farbe bzw. spektrale Lage der Emissionsbande, Intensität bzw. Lumineszenzeffizienz oder -quantenausbeute, Abklingzeit) als Monomer und als Aggregat aufweisen, sowie deren Verwendung in Prozessen, in denen über die Wechselwirkung mit einem Target die Umwandlung des Aggregationszustandes der d8-Metallkomplexverbindungen von Monomeren zu Aggregaten und umgekehrt unter Änderung der Farbe des emittierten Lichtes erfolgt. Anwendungsbeispiele dafür sind Lateral-Flow-Assays wie Schwangerschaftstests, wo die Signalerzeugung über einen Aggregationsprozess erfolgt; die kontrollierte Freisetzung der d8-Metallkomplexverbindungen aus makromolekularen oder partikulären Trägern, an die sie über spaltbare Gruppen (z.B. Peptide: selektive Spaltung durch entsprechende Enzyme wie bei Enzymkonjugaten und sogenannte smart oder aktivierbare Sonden (activatable probes); auf andere Art spaltbare Linker, wie oxidativ spaltbare Linker etc.; Disulfid-Linker: reduktive Spaltung, Hydrazone: pH-induzierte Spaltung etc.) kovalent eng benachbart gebunden sind; das Design von aktivierbaren Sonden, wobei die d8-Metallkomplexverbindungen aggregiert *in vitro* und/oder *in vivo* eingesetzt werden und beispielweise intrazellulär zum Monomer prozessiert werden; Änderung des Aggregationszustandes der d8-Metallkomplexverbindungen durch eine unterschiedliche Hydrophilizität oder Hydrophobizität der Umgebung (z.B. beim Anfärben von Zellmembranen usw.); die Drucksensorik, wobei sich die Abstände zwischen den d8-Metallkomplexverbindungen und damit die optischen Eigenschaften ändern; Monitoring von Aggregations- und Deaggregationsprozessen, beispielsweise in Gegenwart von bestimmten Proteinen wie BSA oder von Tensiden. Unter Ausnutzung der Multifunktionalität der d8-Metallkomplexverbindungen, insbesondere der Unterschiede in der Lumineszenz von Monomeren und Aggregaten, bietet sich die Verwendung der d8-Metallkomplexverbindungen in Nachweismethoden, wie Lumineszenzmethoden, MS-basierten Methoden wie ICP-MS und anderen Methoden, wie XPS und TEM und in Kombinationen dieser Methoden an. Die Erfindung stellt weiterhin neuartige d8-Metallkomplexverbindungen bereit, die die o.g. Eigenschaften aufweisen. In einem weiteren Aspekt betrifft die Erfindung organische und anorganische nanoskalige und mikroskalige Objekte wie Nano- und Mikropartikel und entsprechende Hybridmaterialien, die mit d8-Metallkomplexverbindungen beladen sind und als Trägermaterialien für diese Substanzen fungieren, sowie ein Verfahren zur Herstellung solcher Materialien. Ein weiteres Anwendungsgebiet ist die Funktionsgruppenanalytik von Nano- und Mikropartikeln mit multimodalen Sonden, wobei die d8-Metallkomplexe dabei als Reporter dienen, die mit verschiedenen Analysemethoden und Kombinationen dieser Analysemethoden nachgewiesen und quantifiziert werden können.

### Hintergrund der Erfindung

Es gibt eine Vielzahl molekularer und nanoskaliger Emitter zur Markierung von neutralen und ionischen Analyten für den Nachweis mittels Lumineszenzmesstechniken, die typischerweise Lumineszenzlebensdauern im Nanosekundenbereich zeigen und bei Aggregation in der Regel nicht mehr leuchten; letzteres gilt insbesondere für sehr viele molekulare organische Farbstoffe.³¹⁻³⁷ Ausnahmen sind hier sogenannte AIE (aggregation-induced emission)-Emitter oder CIE (crystallization-induced emission)-Emitter.³⁸⁻⁴⁰ Dabei handelt es sich zumeist um organische Farbstoffe, die oft Propeller-artige Substituenten tragen und die ohne Aggregation in Lösung nicht oder nur sehr gering leuchten und bei Aggregation oder auch im Festkörper stark fluoreszieren. Diese Verbindungen sind aber typischerweise auch nur in einer Form emissiv und zeigen Fluoreszenzlebensdauern im unteren Nanosekundenbereich. Weitere Ausnahmen sind Lanthanid-Verbindungen mit Lebensdauern von mehreren Hundert Mikrosekunden bis Millisekunden, die bei Emitter-Emitter-Wechselwirkungen weiterhin unverändert leuchten oder Löschungsprozesse eingehen, aber meist nur sehr kurzwellig (i.a. bei Wellenlängen |< 420 nm oder noch kürzerwelliger) angeregt werden können und sehr schmale Emissionsbanden zeigen.⁴¹⁻⁴³ Mit Ausnahme von speziellen Cryptand-Verbindungen, wo die emissiven Lanthanid-Ionen wie Eu(III) und Tb(III) von der Umgebung komplett abgeschirmt sind, sind solche Lanthanid-Verbindungen in Wasser kaum emissiv, da die Nähe von hochenergetischen Vibratoren wie -OH oder -NH i.a. zu Emissionslöschung führt. Die spektrale Lage der Emission von Lanthanid-Verbindungen ist zudem kaum von ihrer Umgebung abhängig. Lanthanid-Verbindungen sind zusammen mit Ru-, Os-, Rh und Ir-Komplexen, Zinkbasierten Metalloporphyrinen, Edelmetall-Clustern wie Gold-Nanokristallen oder -Komplexen und sehr wenigen Cr(III)-Komplexen mit speziellem Ligandendesign⁴⁴ die einzigen Emitter, die neben Lumineszenzmesstechniken auch mittels MS-Techniken detektiert werden können. Viele diese Emitter zeichnen sich aber durch zumeist geringe Lumineszenzquantenausbeuten im Bereich von etwa 10% in Gegenwart von Sauerstoff oder weniger aus und haben keine Lumineszenzlebensdauern im unteren Mikrosekundenzeitbereich, der ideal ist als Ergänzung für Nanosekunden-Emitter und schnellere Messungen erlaubt als die Verwendung von Emittern mit Lebensdauern im langen Mikro- bis in den Millisekundenbereich. Zudem werden Emitter mit Lebensdauern im langen Mikro- bis in den Millisekundenbereich mit Ausnahme von Lanthanid-Verbindungen alle durch Sauerstoff gelöscht, d.h. ihre Lumineszenzintensität und ihre Lumineszenzlebensdauer nimmt in Gegenwart von Sauerstoff stark ab. Für MS-Techniken wie LA-ICP-MS (Laser Ablation - Inductively Coupled Plasma - Mass Spectrometry, Massenspektrometrie mit induktiv gekoppeltem Plasma und Laserablation), ICP-MS (Inductively Coupled Plasma - Mass Spectrometry, Massenspektrometrie mit induktiv gekoppeltem Plasma) und spICP-MS (single particle Inductively Coupled Plasma - Mass Spectrometry, Massenspektrometrie mit induktiv gekoppeltem Plasma für einzelne Teilchen) werden Metall-Marker, i.a. Lanthanid-Ionen, koordiniert von makrozyklischen Liganden wie DOTA (1,4,7,10-Tetraazacyclododecan-1,4,7,10-tetraessigsäure), z.B. mit einer reaktiven Gruppe als Voraussetzung für eine Biokonjugation, verwendet, die nicht emissiv sind oder nur bei Direktanregung des Metallions im Falle von z.B. Europium leuchten. Bislang gibt es so gut wie keine Applikationen, die leuchtende und MS-aktive Substanzen für Methodenkombinationen oder die Korrelation von mit diesen Messtechniken erhaltenen Ergebnissen verwenden. Dies bietet sich aber gerade für die Durchflußzytometrie an, wo jetzt neben Lumineszenzmesstechniken auch zunehmend MS-Techniken verwendet werden (mass cytometry), teilweise an demselben Messgerät.⁴⁵ Konventionelle fluoreszente Marker erfordern hierfür i.a. eine doppelte Markierung mit zwei unterschiedlichen Markern für die LumineszenzDetektion (z.B. organische Farbstoffe) und die MS-Detektion (Metall-Marker).⁴⁵

Im Falle von selbst-referenzierten oder sogenannten ratiometrischen Sensoren (Zwei-Banden-Systemen) werden für ratiometrische Messungen der Fluoreszenzintensität meist ein Analytinerter Referenzfarbstoff und ein Analyt-sensitiver Farbstoffe kombiniert, die bei ein und derselben Wellenlänge angeregt werden können und spektral unterscheidbare Emissionsbanden zeigen. Es gibt nur sehr wenige Beispiele, wo ein und dieselbe chemische Verbindung zwei spektral unterscheidbare Emissionsbanden zeigt und so eine ratiometrische Analyt-Detektion mit nur einer Verbindung ermöglicht.^{46,47} Der Sauerstoff-Nachweis erfolgt in der Regel durch Kombination von zwei Farbstoffen.⁴⁸

Gangadharappa et al. berichten erstmals über die vergleichende Verwendung von P-, As- und Sb-basierten Liganden in phosphoreszierenden Koordinationsverbindungen, um neue koordinations-chemische Konzepte für das Design und die Realisierung von maßgeschneiderten Triplett-Emittern mit nicht-konventionellen Elementen zu entwickeln.⁵¹ Proetto et al. berichten über phosphoreszierende Pt(II)-Komplexe als Monomere, die direkt in wachsende Polymere eingebaut werden können. Aufgrund der amphiphilen Natur der Polymere können sie sich selbst zu mizellaren Nanopartikeln anordnen, wobei sich die phosphoreszierenden Pt(II)-Komplexe selektiv im Kern oder in der Hülle der Nanopartikel anordnen können.⁵²

### Beschreibung der Erfindung

Es gibt bislang keine Luminophore mit Lebensdauern im unteren Millisekundenbereich, deren spektrale Eigenschaften (Lage der Absorptions- und Emissionsbanden) über einen breiten Wellenlängenbereich flexibel gesteuert werden können, deren Lumineszenzlebensdauern variiert werden können und die Lumineszenquantenausbeuten > 10% zeigen, insbesondere in wässrigen Medien und in Gegenwart von gelöstem Sauerstoff. Mit herkömmlichen Luminophoren ist es nicht möglich, auch den direkten Abgleich von zwei der in den Lebenswissenschaften am häufigsten eingesetzten Nachweis- und Detektionsmethoden, hier von Lumineszenz- und MS-Messtechniken wie LA-ICP-MS oder spICP-MS vorzunehmen. Zudem können die meisten Emitter nicht über Transmissions-elektronenmikroskopie (TEM) direkt in einem Partikel oder einer anderen Struktur wie einer Zelle nachgewiesen werden, um so beispielsweise die Partikelanfärbung oder die Zellanfärbung direkt nachzuweisen und/oder zum Nachweis dieser Partikel z.B. in Zellen oder anderen Matrices zu verwenden. Dies ermöglicht auch die Kombination mit fluoreszenzmikroskopischen Verfahren (1 Photonen- und 2 Photonen-Mikroskopie; FLIM: Fluorescence Lifetime Imaging bzw. PLIM: Phosphorescence Lifetime Imaging).

Die Aufgabe der Erfindung bestand deshalb darin, Luminophore zum Färben von Nano- und Mikropartikeln und/oder zur Markierung von Zellen, Zellbausteinen und Makromolekülen und/oder von Nano- und Mikropartikeln bereitzustellen.

Die Aufgabe der Erfindung wird generell gelöst durch die Verwendung von Luminophoren, deren spektrale Eigenschaften (Lage der Absorptions- und Emissionsbanden) über einen breiten Wellenlängenbereich flexibel gesteuert werden können, deren Lumineszenzlebensdauern variiert werden können und die Lumineszenquantenausbeuten > 10% zeigen, auch in Gegenwart von Sauerstoff. Insbesondere werden mit diesen Luminophoren beladene Nano- und Mikropartikel oder andere Trägersysteme als Reporter- und Sensor-Plattformtechnologie für Lumineszenz-basierte Messtechniken und MS-basierte Messtechniken und die Kombination dieser Methoden bereitgestellt.

Die Aufgabe der Erfindung wird speziell gelöst durch die Verwendung von d8-Metallkomplexverbindungen gemäß Anspruch 1. Überraschenderweise wurde gefunden, dass solche d8-Metallkomplexverbindungen, wie Pd(II) Komplexe und anderen metallorganischen Verbindungen wie Pt(II), Au(III), Ag(III), Rh(I), Ir(I) usw. unterschiedliche optische Eigenschaften, insbesondere eine unterschiedliche Lumineszenz (Farbe bzw. spektrale Lage der Emissionsbande, Intensität bzw. Lumineszenzeffizienz oder -quantenausbeute, Abklingzeit) als Monomer gegenüber dem Aggregat aufweisen. Die emittierte Wellenlänge hängt dabei von dem Abstand zwischen den Metallzentren der Komplexe ab, da diese die Aufspaltung der dz2-Orbitale und somit die Energie der emittierenden Exzimere im Aggregat bestimmen. Während die freien (nicht kompakt nebeneinander liegenden) monomeren Spezies vom gelösten Sauerstoff über Triplett-Triplett Annihilierung (einen Energietransfer-Prozess) gelöscht werden können, sind die kompakten Aggregate unempfindlich gegenüber Diffusionskontrollierten Löschungsprozessen.

"Färben" im Sinne der Erfindung bedeutet, dass die d8-Metallkomplexverbindungen bei erfindungsgemäßer Verwendung in Prozessen, in denen über die Wechselwirkung mit einem Target die Umwandlung des Aggregationszustandes der d8-Metallkomplexverbindungen von Monomeren zu Aggregaten und umgekehrt erfolgt, bei dieser Umwandlung von Monomeren zu Aggregaten und umgekehrt eine Änderung der Farbe des emittierten Lichtes erfolgt, die mit konventionellen Methoden und Mitteln detektiert werden kann. Im Gegensatz dazu sind bislang im Stand der Technik lediglich Verfahren bekannt, bei denen mit Metallkomplexen die Beladung eines Targets so gewählt wurde, dass die Partikel stark geleuchtet haben. Konzentrationsabhängige Aggregationseffekte konnten nicht genutzt werden, weil die eingebauten Farbstoffe und Komplexe bei Aggregation nur eine Fluoreszenzlöschung und bestimmte Aggregationsbanden in der Absorption zeigen, aber keine Aggregations-induzierten Änderungen der Absorptionsfarbe, der Lumineszenzfarbe und der Lumineszenzquantenausbeute und der Lumineszenzlebensdauer ^{(46,47)}.

Insbesondere betrifft die Erfindung die Verwendung von d8-Metallkomplexverbindungen zum Färben von Targets wie Polymerfilmen, Nano- und Mikropartikeln und/oder zur Markierung von Zellen, Zellbausteinen und Makromolekülen und zum Markieren von Nano- und Mikropartikeln.

Kernstück der Erfindung sind d8-Metallkomplexverbindungen, z.B. Pt(II) und Pd(II)-Verbindungen mit mehrzähnigen Liganden als Luminophore, die eine durch die chemische Natur und das Substitutionsmuster der diese Metallionen koordinierenden polydentaten Liganden bedingte unterschiedliche Hydrophilizität und ein unterschiedliches Aggregationsverhalten zeigen und insbesondere Monomore und Aggregate bilden, die sich in ihren optischen Eigenschaften stark unterscheiden. Dies beinhaltet unterschiedliche Absorptionsspektren und Extinktionskoeffizienten und insbesondere unterschiedliche Lumineszenzspektren und Lumineszenzquantenausbeuten und unterschiedliche Lumineszenzlebensdauern, wobei der monomere Komplex kürzerwelliger absorbiert und kürzerwellig und längerlebig emittiert als der aggregierte Komplex. Damit können über den Liganden, die Komplex-Konzentration und den Aggregationszustand die optischen Eigenschaften der Komplexe gesteuert werden und unterschiedlich gefärbte und in unterschiedlichen Farben und mit unterschiedlichen Lebensdauern emittierende Systeme erhalten werden. Das kann z.B. für das direkte Anfärben von biologischen Objekten ausgenutzt werden, wo über die unterschiedliche Mikroumgebung der Luminophore der Aggregationszustand gesteuert wird, oder für die Herstellung von spektral, Intensitäts-, und Lebensdauer-kodierten Systemen für Multiplexing- und Barcoding-Applikationen z.B. unter Verwendung von Nano- bis Mikrometer-großen Partikeln als kodierte Reporter- und Trägermaterialien.^{49,50} Da sich Pt- und Pd-Verbindungen auch mittels MS-Techniken wie LA-ICP-MS und spICP-MS nachweisen lassen, können diese molekularen, aggregierten und Partikel-Systeme auch mittels MS-Methoden detektiert und quantifiziert werden. Sie ermöglichen damit Methodenkombinationen von Lumineszenz- und MS-Techniken zur Zell- und Gewebeanalytik (auch von Lumineszenz- und MS-Imaging-Methoden) oder in der Durchflußzytometrie mit LA-ICP-MS- und Fluoreszenzdetektion. Dies ermöglicht eine schnelle Methodenvalidierungen und kann zur Herstellung von Kalibrierwerkzeugen ausgenutzt werden, die für verschiedene Methoden geeignet sind. Außerdem kann durch diesen Methodenabgleich das Quantifizierungspotenzial von Lumineszenztechniken verbessert werden, was insbesondere für die Lumineszenzdetektion in Kombination mit der Durchflußzytometrie von großer Relevanz ist. Zudem können Pd- und Pt-Verbindungen direkt über Transmissionselekronenmikroskopie nachgewiesen werden und damit mit einer Analysenmethode, die eine Ortsauflösung im Picometer-Bereich ermöglicht, während optischmikroskopische Methoden (mit Ausnahme von superauflösenden Mikroskopiemethoden) eine Beugungs-begrenzte Auflösung von ein paar 100 nm haben).

In einer bevorzugten Ausführungsform der Erfindung liegt die d8-Metallkomplexverbindung als Monomer oder als Aggregat oder einer Mischung aus Monomeren und Aggregaten vor. Besonders bevorzugt ist es, wenn die mindestens eine d8-Metallkomplexverbindung als Monomer oder Aggregat, wie beispielsweise als Dimer, Trimer, Tetramer usw. bis hin zu einem Multimer vorliegt. Insbesondere bevorzugt ist es, wenn die mindestens eine d8-Metallkomplexverbindung in einer Mischung aus Monomeren und Aggregaten vorliegt. Es wurde gefunden, dass die Lumineszenz der Monomere durch Sauerstoff, Lösungsmittel oder bestimmte Analyten gelöscht werden, wohingegen die Lumineszenz der Aggregate, vorzugsweise der Aggregate, durch Sauerstoff nicht oder nur minimal beeinflussbar ist. Diese Eigenschaften der erfindungsgemäßen d8-Metallkomplexverbindungen sind besonders vorteilhaft. Sie können beispielsweise dazu verwendet werden, einen einfach herstellbaren Sauerstoffsensor zu konstruieren oder alle Prozesse, die mit einer Änderung des Aggregationszustandes verbunden sind, spektral aufgelöst und mit dem Auge oder einer Handy-Kamera einfach zu detektieren.

In einer bevorzugten Ausführungsform der Erfindung weisen die Monomere der erfindungsgemäßen d8-Metallkomplexverbindung lumineszente Lebensdauern (in Abwesenheit von Sauerstoff) im Bereich von 1 µs bis 300 µs, vorzugsweise im Bereich von 5 µs bis 100 µs, besonders bevorzugt im Bereich von 5 bis 50 µs aufweisen; und/oder dass die Aggregate der d8-Metallkomplexverbindung lumineszente Lebensdauern im Bereich von 1 µs bis 50 µs, vorzugsweise im Bereich von 5 µs bis 30 µs, besonders bevorzugt unterhalb von 10 µs aufweisen. Die lumineszenten Lebensdauern der d8-Metallkomplexverbindungen gemäß der Erfindung sind deutlich höher als die lumineszenten Lebensdauern von aus dem Stand der Technik bekannten Metallkomplexverbindungen und eignen sich deshalb für die beanspruchte Verwendung zum Färben verschiedener Materialien.

In einer besonders bevorzugten Ausführungsform betrifft die Erfindung deshalb die Verwendung von d8-Metallkomplexverbindungen zum Färben von Nano- und Mikropartikeln und/oder zur Markierung von Zellen, Zellbausteinen und Makromolekülen und/oder von Nano- und Mikropartikeln, dadurch gekennzeichnet, dass
- die d8-Metallkomplexverbindung als Monomer oder als Aggregat oder einer Mischung aus Monomeren und Aggregaten, vorzugsweise als Monomer oder Aggregat oder einer Mischung aus Monomeren und Aggregaten vorliegt;
- die Monomere der d8-Metallkomplexverbindung mit lumineszenten Lebensdauern (in Abwesenheit von Sauerstoff) im Bereich von 1 µs bis 300 µs, vorzugsweise im Bereich von 5 µs bis 100 µs, besonders bevorzugt im Bereich von 5 bis 50 µs aufweisen; und/oder dass die Aggregate, vorzugsweise Dimere, Trimere, Tetramere oder Multimere der d8-Metallkomplexverbindung lumineszente Lebensdauern im Bereich von 1 µs bis 50 µs, vorzugsweise im Bereich von 5 µs bis 30 µs, besonders bevorzugt unterhalb von 10 µs aufweisen.

In einer weiteren bevorzugten Ausführungsform der Erfindung weisen die Monomere der erfindungsgemäßen d8-Metallkomplexverbindung eine Lichtabsorption von Wellenlängen von 450 nm oder weniger, vorzugsweise von 420 nm oder weniger, besonders bevorzugt von 400 nm auf und/oder die Aggregate der d8-Metallkomplexverbindung eine Lichtabsorption von Wellenlängen unterhalb von 500 nm oder weniger, vorzugsweise von 450 nm oder weniger, besonders bevorzugt von 420 nm auf.

In einer weiteren bevorzugten Ausführungsform der Erfindung weisen die Monomere der d8-Metallkomplexverbindung eine Lichtemission von Wellenlängen im Bereich von 430 nm bis 650 nm, vorzugsweise von 450 nm bis 550 nm auf und/oder die Aggregate, vorzugsweise Dimere, Trimere, Tetramere oder Multimere der d8-Metallkomplexverbindung eine Lichtemission von Wellenlängen 600 nm bis 800 nm, vorzugsweise 600 nm bis 700 nm auf.

Verfahren zum Messen der Lichtabsorption und -emission sind der Fachperson geläufig.

Damit werden zur Lösung der Aufgabe der Erfindung d8-Metallkomplexverbindungen als Luminophore mit Absorption und Emission im sichtbaren und langwelligen Spektralbereich mit Lebensdauern im unteren Mikrosekundenbereich bereitgestellt, die als Ergänzung von Nanosekunden-Emittern verwendet werden können.

Die erfindungsgemäßen d8-Metallkomplexverbindungen haben weiterhin den Vorteil, dass die Absorptions- und Lumineszenzeigenschaften (spektrale Lage der Absorptions- und Emissionsbanden, die Lumineszenzquantenausbeute und das Lumineszenzabklingverhalten/- lebensdauer) durch eine Liganden- und Mikroumgebungs-kontrollierte Aggregation in Lösung oder in Partikeln oder Filmen oder bei der Färbung / Markierung von biologischen Objekten wie Zellen oder Gewebe oder Partikeln gesteuert werden kann.

Wie bereits erwähnt, sind die erfindungsgemäßen d8-Metallkomplexverbindungen dadurch gekennzeichnet, dass die Lumineszenz der Monomere durch Sauerstoff, Lösungsmittel oder bestimmte Analyten gelöscht werden kann und/oder die Lumineszenz der Aggregate, vorzugsweise der Dimere, Trimere, Tetramere oder Multimere durch Sauerstoff nicht beeinflussbar ist. Die lumineszente Lebensdauer der Monomere ist abhängig von der Sauerstoffkonzentration und kann in vorteilhafter Weise im Bereich von 300 µs in Abwesenheit von Sauerstoff bis hin zu 10 ns, vorzugsweise von 50 µs bis hin zu 50 ns, besonders bevorzugt im Bereich von 10 µs bis hin zu 50 ns in Anwesenheit von Triplett-Sauerstoff gesteuert werden. Umgekehrt kann diese Eigenschaft der Monomere ausgenutzt werden, um die Sauerstoffkonzentration in einem Medium zu messen. Ein weiterer Vorteil besteht darin, dass eine einfache Unterscheidung zwischen gebundenen und nicht gebundenen Komplexverbindungen in biologischen Geweben und bei anderen Anwendungen durch Ausnutzung von Aggregations-induzierten Änderungen der optischen Eigenschaften und Löschung nicht gebundener Spezies durch Lösemittel, gelösten molekularen Triplett-Sauerstoff oder durch sonstige Analyte möglich ist.

Die lumineszente Lebensdauer kann bestimmt werden mittels Methoden wie zeitaufgelösten Lumineszenzmesstechniken wie Time-Correlated Single Photon Counting oder Multi-Channel Scaling oder mittels Phasenfluorometrie, sowohl in Lumineszenzspektrometern als auch in Phosphorescence/Luminescence/Fluorescence Lifetime Imaging Microscopes oder in Mikrotiterplattenauslesegeräten mit der Option der Zeitauflösung oder mit Durchflußzytometern, die für zeitaufgelöste Fluoreszenzmessungen ausgelegt sind. Diese Methoden sind der Fachperson geläufig.

In einer weiteren bevorzugten Ausführungsform der Erfindung weisen die Monomere der d8-Metallkomplexverbindungen eine Quantenausbeute in Abwesenheit von Sauerstoff von bis zu 80 % und in Anwesenheit von Sauerstoff von unterhalb 1 % aufweisen und/oder die Aggregate, vorzugsweise Dimere, Trimere, Tetramere oder Multimere der mindestens einen d8-Metallkomplexverbindung eine von Sauerstoff unabhängige oder nahezu unabhängige Quantenausbeute von 30 bis 50 %, vorzugsweise 35 bis 45 % auf.

Die Quantenausbeute kann bestimmt werden nach der Methode mit einer Integrating Sphere (Ulbricht Kugel) oder relativ unter Verwendung eines sogenannten Quantenausbeutestandards mit bekannter Fluoreszenzqunatenausbeute. Diese Methode ist der Fachperson bekannt.

Eine "d8-Metallkomplexverbindung" im Sinne der Erfindung ist eine Metallkomplexverbindung, in der das zentrale Metallatom eine d8-Elektronenkonfiguration aufweist. Vorzugsweise besitzt die d8-Metallkomplexverbindung der Erfindung einen tridentaten (dreizähnige) oder tetradentaten (vierzähnige) Liganden als chelatisierendes Luminophor (mit oder ohne Cyclometallierung). Die d8-Metallkomplexverbindungen weisen in der Regel eine quadratisch planare Koordination auf. Weiterhin bevorzugt ist es, wenn die d8-Metallkomplexverbindung ein zentrales Metallatom aufweisen, das ausgewählt ist aus Pt(II), Pd(II), Au(III), Ag(III), Rh(I) und Ir(I).

In einer mehr bevorzugten Ausführungsform betrifft die Erfindung die Verwendung einer d8-Metallkomplexverbindung wie hierin beschrieben, wobei die d8-Metallkomplexverbindung eine Verbindung der allgemeinen Formel (1) ist: 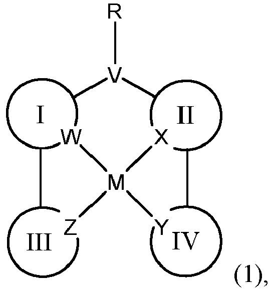 wobei
I, II, III, IV unabhängig voneinander ausgewählt sind aus C₅ Aryl, C₆ Aryl, C₅ Heteroaryl und C₆ Heteroaryl; wobei jedes der Ringatome, außer W, X, Y und Z, unabhängig voneinander optional substituiert sein kann mit Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
V, W, X, Y und Z unabhängig voneinander ausgewählt sind aus O, B, C, und N;
R ausgewählt ist aus Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
M ausgewählt ist aus Pt(II), Pd(II), Au(III), Ag(III), Rh(I) und Ir(I);

In einer weiteren, mehr bevorzugten Ausführungsform betrifft die Erfindung die Verwendung einer d8-Metallkomplexverbindung wie hierin beschrieben, wobei die d8-Metallkomplexverbindung eine Verbindung der allgemeinen Formel (2) ist: 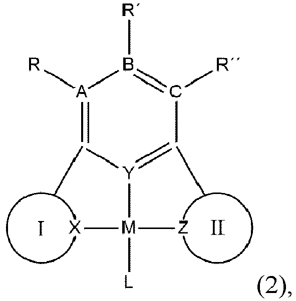 wobei
I, II, III, IV unabhängig voneinander ausgewählt sind aus C₅ Aryl, C₆ Aryl, C₅ Heteroaryl und C₆ Heteroaryl; wobei jedes der Ringatome, außer X und Z, unabhängig voneinander optional substituiert sein kann mit Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
R, R' und R" unabhängig voneinander ausgewählt sind aus Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
A, B, C, X, Y, Z ausgewählt sind aus B, C, N;
M ausgewählt ist aus Pt(II), Pd(II), Au(III), Ag(III), Rh(I) und Ir(I); und
L ausgewählt ist aus Phosphan, Arsan, Stiban, Bismuthan, (siehe JACS 2020 Strassert et al) Azol, Azin, Acetylid, Isonitril, Halogen, Carben und Nitril.

In einer besonders bevorzugten Ausführungsform werden erfindungsgemäß d8-Metallkomplexverbindungen der allgemeinen Formel (la) verwendet: 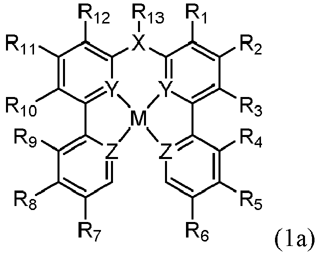 wobei
R₁ bis R₁₃ unabhängig voneinander ausgewählt sind aus Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
X, Y, Z ausgewählt sind aus O, B, C, N;
M ausgewählt ist aus Pt(II), Pd(II), Au(III), Ag(III), Rh(I) und Ir(I).

Für Formel (la) gelten folgende bevorzugte Substitionsmuster:
R₁ bis R₁₂ sind vorzugsweise unabhängig voneinander ausgewählt aus Wasserstoff und Fluor.
In einer besonders bevorzugten Ausführungsform werden R₁ bis R₁₂ durch Wasserstoff dargestellt. In einer weiteren bevorzugten Ausführungsform werden R₁, R₂, R₃, R₅, R₈, R₁₀, R₁₁, und R₁₂ durch Wasserstoff dargestellt und R₄, R₆, R₇, und R₉ werden durch Fluor dargestellt.
R₁₃ ist vorzugsweise Aryl substituiert durch Alkyl oder Alkoxy, besonders bevorzugt Phenyl substituiert durch Methoxy.
X ist vorzugsweise N.
Y ist vorzugsweise N.
Z ist vorzugsweise C.
M ist vorzugsweise ausgewählt aus Pt(II) und Pd(II).

In einer weiteren besonders bevorzugten Ausführungsform werden erfindungsgemäß d8-Metallkomplexverbindungen der allgemeinen Formel (2a) bereit: 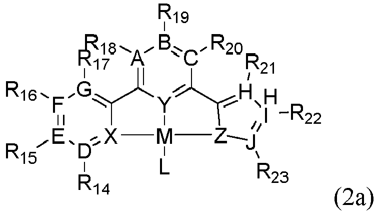 wobei
R₁₄ bis R₂₃ unabhängig voneinander ausgewählt sind aus Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
A, B, C, D, E, F, G, H, I, J, X, Y, Z an den Positionen der Ringstrukturen ausgewählt sind aus B, C, N;
M ausgewählt ist aus Pt(II), Pd(II), Au(III), Ag(III), Rh(I) und Ir(I); und
L ausgewählt ist aus Phosphan, Arsan, Stiban, Bismuthan, Azol, Azin, Acetylid, Isonitril, Halogen, Isonitrile, Carbene und Nitril.

In der Beschreibung und in den Ansprüchen bezeichnet der Ausdruck "Alkyl", sofern er nicht speziell eingeschränkt wurde, eine C₁₋₁₂ Alkyl-Gruppe, in geeigneter Weise eine C₁₋₈ Alkyl-Gruppe, zum Beispiel C₁₋₆ Alkyl-Gruppe, zum Beispiel C₁₋₄ Alkyl-Gruppe. Alkyl-Gruppen können geradkettig oder verzweigt sein. Geeignete Alkyl-Gruppen umfassen zum Beispiel Methyl, Ethyl, Propyl (zum Beispiel n-Propyl und iso-Propyl), Butyl (zum Beispiel n-Butyl, iso-Butyl, sec-Butyl und tert-Butyl), Pentyl (zum Beispiel n-Pentyl), Hexyl (zum Beispiel n-Hexyl), Heptyl (zum Beispiel n-Heptyl) und Octyl (zum Beispiel n-Octyl). Der Ausdruck "Alk", zum Beispiel in den Ausdrücken "Alkoxy", "Haloalkyl", und "Thioalkyl", sollte interpretiert werden in Übereinstimmung mit der Definition von "Alkyl". Beispielhafte AlkoxyGruppen umfassen Methoxy, Ethoxy, Propoxy (zum Beispiel n-Propoxy), Butoxy (zum Beispiel n-Butoxy), Pentoxy (zum Beispiel n-Pentoxy), Hexoxy (zum Beispiel n-Hexoxy), Heptoxy (zum Beispiel n-Heptoxy) und Octoxy (zum Beispiel n-Octoxy). Beispielhafte Thioalkyl-Gruppen umfassen Methylthio-. Beispielhafte Haloalkyl-Gruppen umfassen zum Beispiel CF₃.

Der Ausdruck "Alkenyl", sofern er nicht speziell eingeschränkt wurde, bezeichnet eine C₂₋₁₂ Alkenyl-Gruppe, in geeigneter Weise eine C₂₋₆ Alkenyl-Gruppe, zum Beispiel eine C₂₋₄ Alkenyl-Gruppe, welche mindestens eine Doppelbindung an einer beliebigen erwünschten Stelle enthält und welche keine Dreifachbindungen enthält. Alkenyl-Gruppen können geradkettig oder verzweigt sein. Beispielhafte Alkenyl-Gruppen, die eine Doppelbindung enthalten, umfassen Propenyl und Butenyl. Beispielhafte Alkenyl-Gruppen, die zwei Doppelbindungen enthalten, umfassen Pentadienyl, zum Beispiel (1E, 3E)-Pentadienyl.

Der Ausdruck "Alkinyl", sofern er nicht speziell eingeschränkt wurde, bezeichnet eine C₂₋₁₂ Alkinyl-Gruppe, in geeigneter Weise eine C₂₋₆ Alkinyl-Gruppe, zum Beispiel eine C₂₋₄ Alkinyl-Gruppe, welche mindestens eine Dreifachbindung an einer beliebigen erwünschten Stelle enthält und auch eine oder mehrere Doppelbindungen enthalten oder nicht enthalten kann. Alkinyl-Gruppen können geradkettig oder verzweigt sein. Beispielhafte Alkinyl-Gruppen umfassen Propinyl und Butinyl.

Der Ausdruck "Aryl", sofern er nicht speziell eingeschränkt wurde, bezeichnet eine C₆₋₁₂ Aryl-Gruppe, in geeigneter Weise eine C₆₋₁₀ Aryl-Gruppe, in mehr geeigneter Weise eine C₆₋₈ Aryl-Gruppe. Aryl-Gruppen enthalten mindestens einen aromatischen Ring (zum Beispiel einen, zwei oder drei Ringe). Ein Beispiel einer typischen Aryl-Gruppe mit einem aromatischen Ring ist Phenyl. Ein Beispiel einer typischen Aryl-Gruppe mit zwei aromatischen Ringen ist Naphthyl.

Der Ausdruck "Heteroaryl", sofern er nicht speziell eingeschränkt wurde, bezeichnet einen Arylrest, bei dem ein oder mehrere (zum Beispiel 1, 2, 3 oder 4, in geeigneter Weise 1, 2 oder 3) Ringatome durch Heteroatome ersetzt sind, die aus N, S und O ausgewählt sind, oder sonst einen 5-gliedrigen aromatischen Ring, der ein oder mehrere (zum Beispiel 1, 2, 3 oder 4, in geeigneter Weise 1, 2 oder 3) Ringatome enthält, die aus N, S und O ausgewählt sind. Beispielhafte monocyclische Heteroaryl-Gruppen, die ein Heteroatom enthalten, umfassen: fünfgliedrige Ringe (zum Beispiel Pyrrol, Furan, Thiophen); und sechsgliedrige Ringe (zum Beispiel Pyridin wie zum Beispiel Pyridin-2-yl, Pyridin-3-yl und Pyridin-4-yl). Beispielhafte monocyclische Heteroaryl-Gruppen, die zwei Heteroatome enthalten, umfassen: fünfgliedrige Ringe (zum Beispiel Pyrazol, Oxazol, Isoxazol, Thiazol, Isothiazol, Imidazol wie zum Beispiel Imidazol-1-yl, Imidazol-2-yl, Imidazol-4-yl); sechsgliedrige Ringe (zum Beispiel Pyridazin, Pyrimidin, Pyrazin). Beispielhafte monocyclische Heteroaryl-Gruppen, die drei Heteroatome enthalten, umfassen: 1,2,3-Triazol und 1,2,4-Triazol. Beispielhafte monocyclische Heteroaryl-Gruppen, die vier Heteroatome enthalten, umfassen Tetrazol. Beispielhafte bicyclische Heteroaryl-Gruppen umfassen: Indol (zum Beispiel Indol-6-yl), Benzofuran, Benzthiophen, Chinolin, Isochinolin, Indazol, Benzimidazol, Benzthiazol, Chinazolin und Purin.

Der Begriff "Halogen" umfasst Fluor (F), Chlor (Cl) und Brom (Br).

Besonders bevorzugt sind d8-Metallkomplexverbindungen, die ausgewählt sind aus den Beispielverbindungen 1 bis 55 wie in Tabelle 1 dargestellt.

**Tabelle 1: Beispiele tritentater und tetratentater d8-Metallkomplexverbindungen**

| **Bsp. Nr.** | **Strukturformel** | **Publiziert in** |
|---|---|---|
| ***A) Beispiele für tridentate Liganden*** | | |
| 1 | 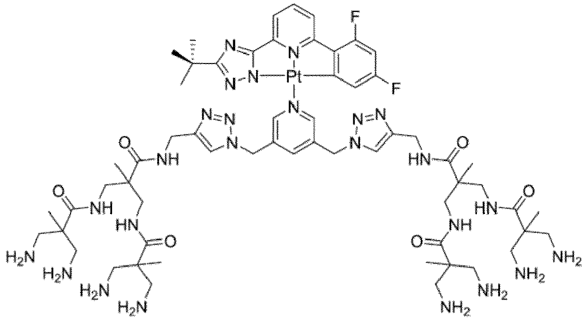 | 16 |
| 2, 3 | 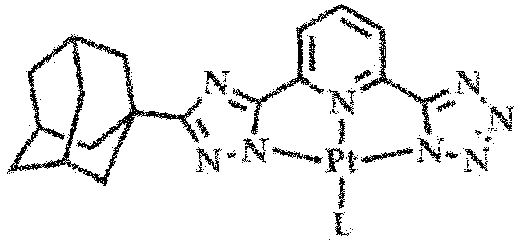 | 17 |
| | 2: L is PPh₃ | |
| | 3: L is 4-C₅H₁₁-py | |
| 4 | 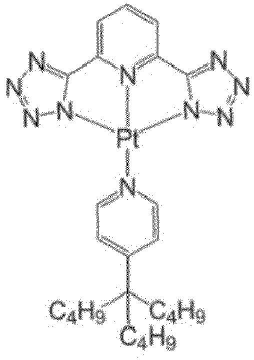 | 18 |
| 5-13 | 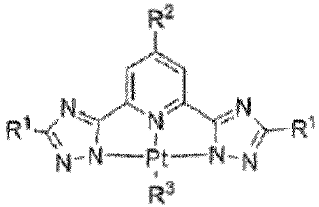 | 19 DE 102011001007 |
| | 5: R¹ = CF₃; R² = H, R³ = 4-Amylpyridin | |
| | 6: R¹ = *t*Bu; R² = H, R³ = 4-Amylpyridin | |
| | 7: R¹ = *t*Bu; R² = OMe, R³ = 4-Amylpyridin | |
| | 8: R¹ = CF₃; R² = OMe, R³ = 4-Amylpyridin | |
| | 9: R¹ = CF₃; R² = H, R³ = P(phenyl)₃ | |
| | 10: R¹ = *t*Bu; R² = H, R³ = P(phenyl)₃ | |
| | 11: R¹ = *t*Bu; R² = OMe, R³ = P(phenyl)₃ | |
| | 12: R¹ = CF₃; R² = OMe, R³ = P(phenyl)₃ | |
| | 13: R¹ = Ph; R² = OMe, R³ = P(phenyl)₃ | |
| 14-17 | 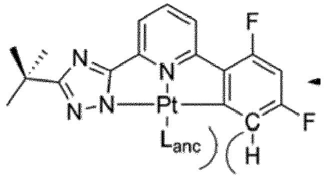 | 20 |
| | 14: L_{anc} = P(phenyl)3, | |
| | 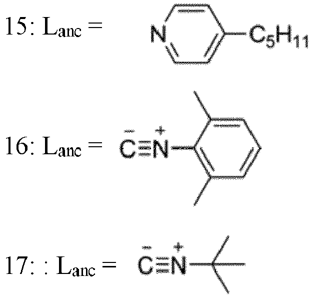 | |
| 18-21 | 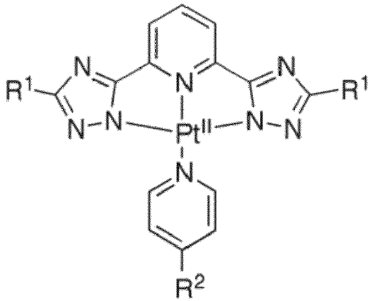 | 21 DE 102011001007 |
| | 18: R¹ = Adamantyl, R² = C₅H₁₁ | |
| | 19: R¹ = Adamantyl, R² = C(C₄H₉)₃ | |
| | 20: R¹ = Toluenyl, R² = C₅H₁₁ | |
| | 21: R¹ = Toluenyl, R² = C(C₄H₉)₃ | |
| 22-28 | 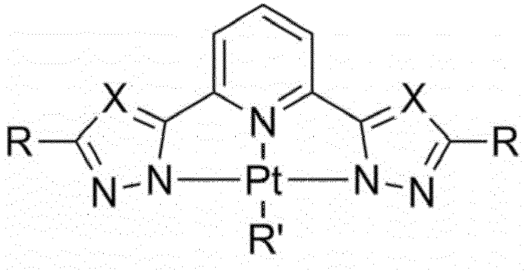 | 22 DE 102011001007 |
| | 22: R = Adamantyl, R' = PPh₃, X = N; | |
| | 23: R = Adamantyl, R' = NHC, X = N; | |
| | 24: R = Adamantyl, R' = C₅H₁₁PY, X = N; | |
| | 25: R = Toluenyl, R' = C₅H₁₁Py, X = N; | |
| | 26: R = Adamantyl, R' = C₅H₁₁PY, X = C; | |
| | 27: R = Adamantyl, R' = PPh₃, X = C; | |
| | 28: R = Toluenyl, R' = PPh₃, X = C. | |
| 29 | Pyridin 2,6-bis(3-(Trifluoromethyl)-1,2,4-Triazolato-5-yl)Pyridin Platin(II) | 23 |
| 30 | 4-Pentyl-Pyridin 2,6-bis(3-(Trifluoromethyl)-1,2,4-Triazolato-5-yl)Pyridine Platinum(II) | 23 |
| 31 | 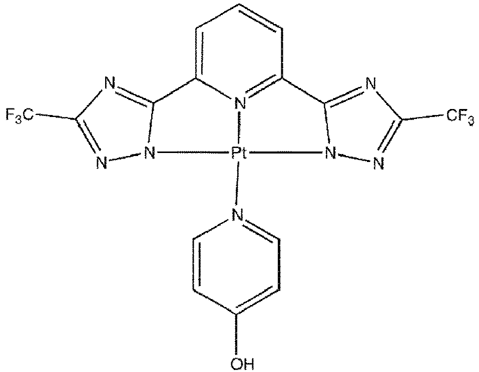 | WO2012117082 |
| 32 | 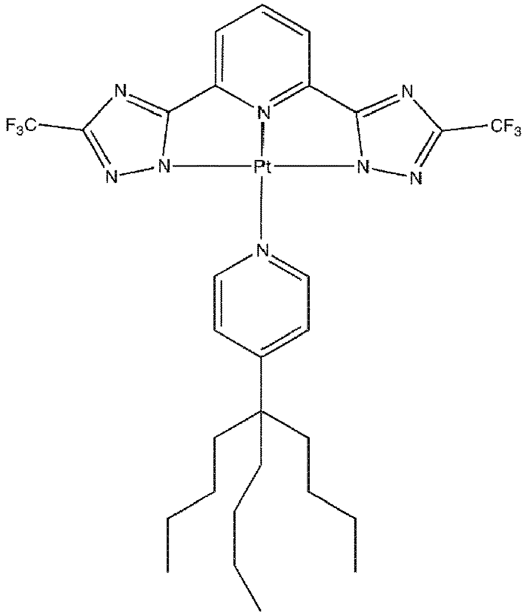 | WO2012117082 |
| 33 | 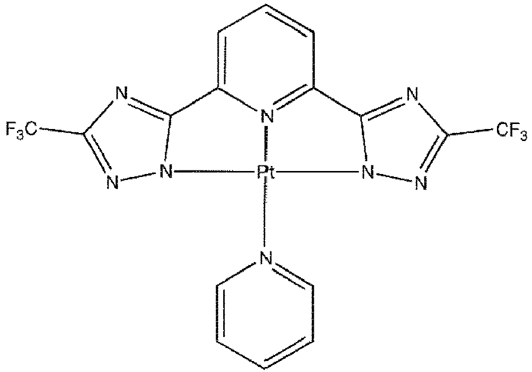 | WO2012117082 |
| 34 | 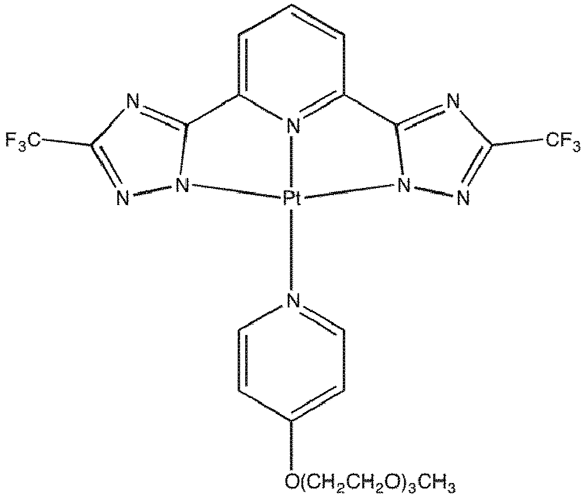 | WO2012117082 |
| 35 | 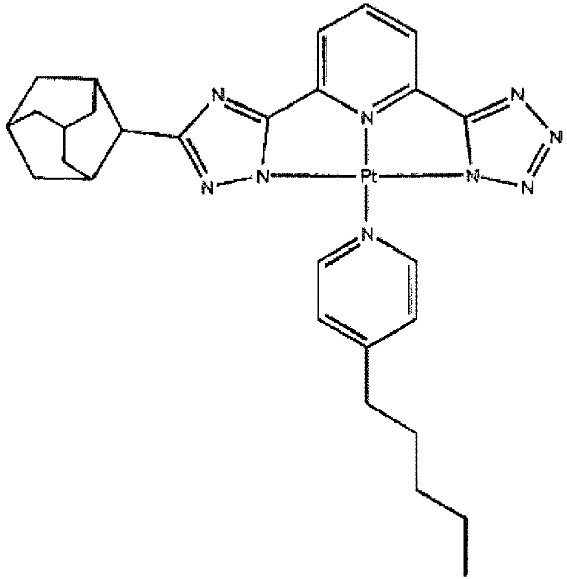 | DE 102011001007 |
| 36 | 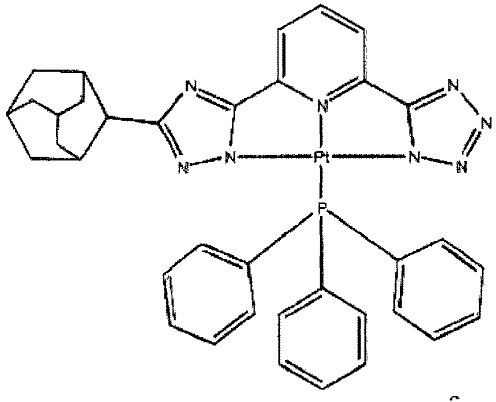 | DE 102011001007 |
| 37 | 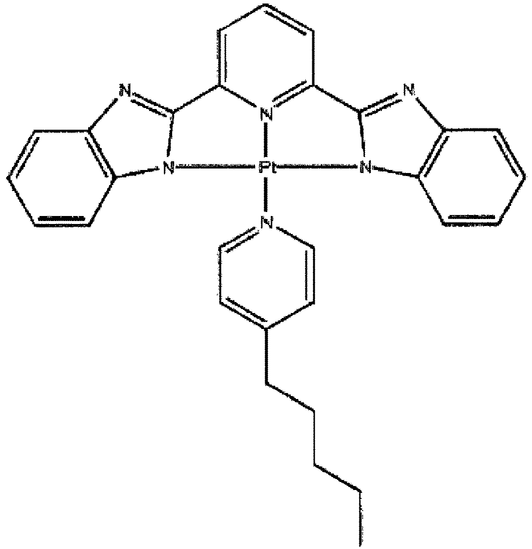 | DE 102011001007 |
| 38 | 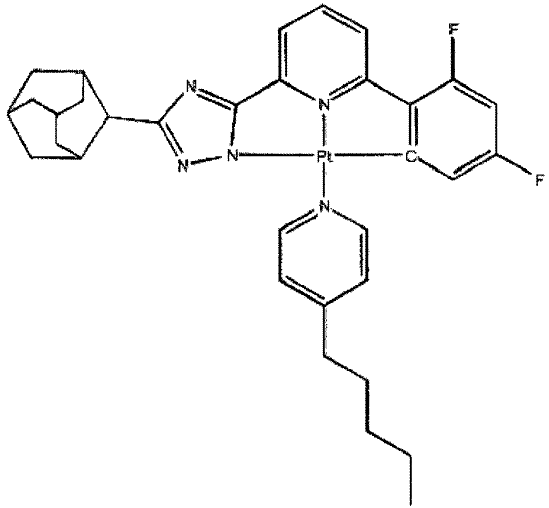 | DE 102011001007 |
| 39 | 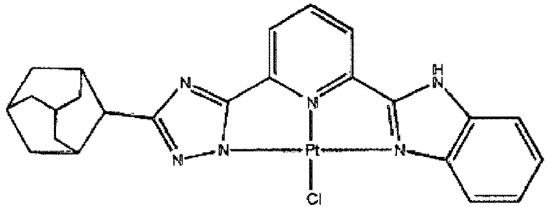 | DE 102011001007 |
| 40 | 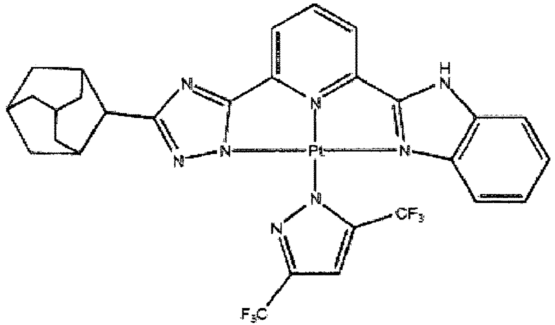 | DE 102011001007 |
| ***B) Beispiele für tetradentate Liganden*** | | |
| 41, 42 | 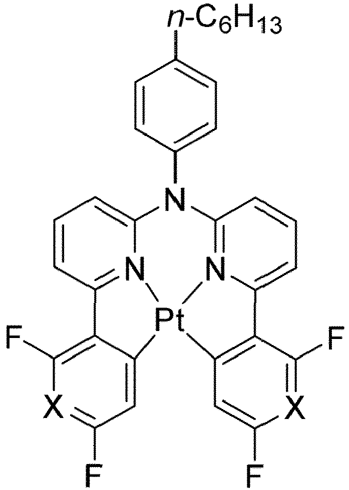 41: X = CH 42: X = N | 24 |
| 43 | 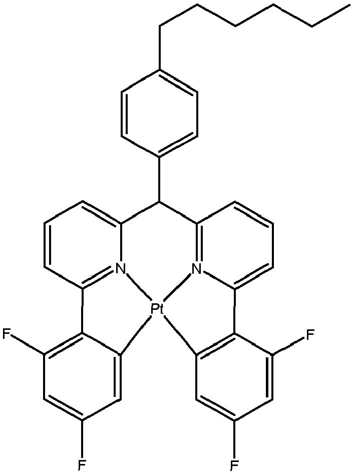 | 25 |
| 44 | 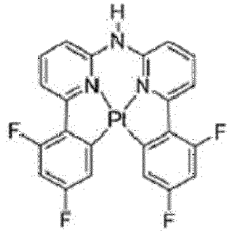 | 25 |
| 45 | 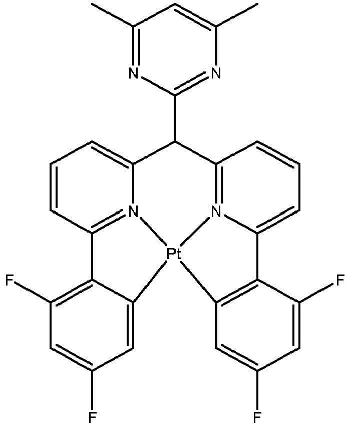 | 25 |
| 46 | 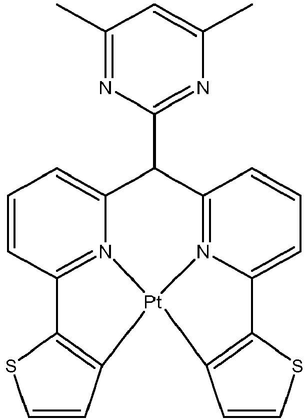 | 25 |
| 47-51 | 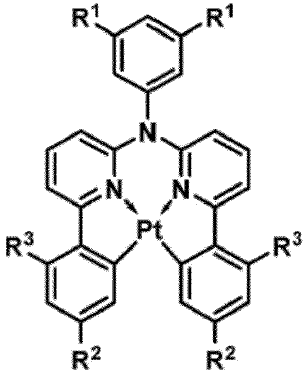 | 26 |
| | 47: R¹ = CH₃O, R² = H, R³ = H | |
| | 48: R¹ = CH₃O, R² = F, R³ = H | |
| | 49: R¹ = CH₃O, R² = F, R³ = F | |
| | 50: R¹ = H, R² = H, R³ = H | |
| | 51: R¹ = H, R² = F, R³ = F | |
| 52 | 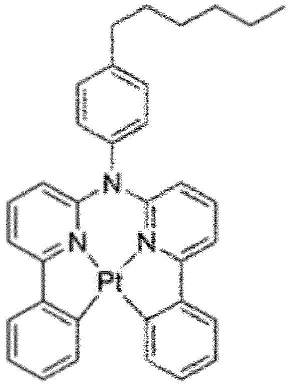 | 27 |
| 53 | 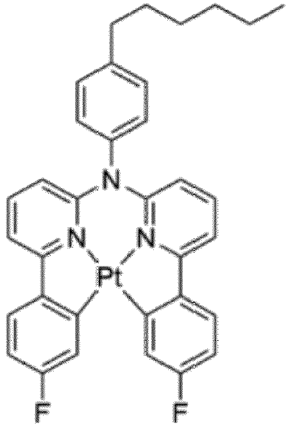 | 27 |
| 54 | 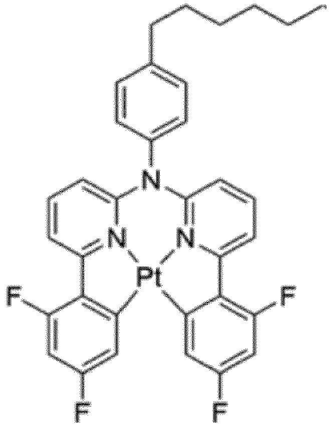 | 27 |
| 55 | 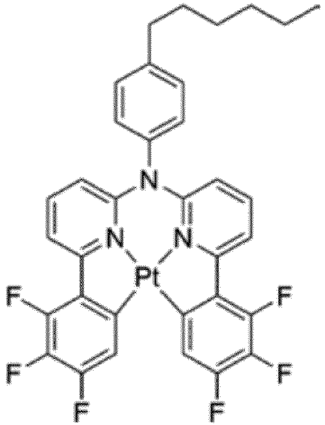 | 27 |

Bevorzugte d8-Metallkomplexverbindungen mit tridentaten Liganden sind ausgewählt aus den Beispielverbindungen 1 bis 40. Bevorzugte d8-Metallkomplexverbindungen mit tetradentaten sind ausgewählt aus den Beispielverbindungen 41 bis 55.

Besonders bevorzugt sind Pt(II)- oder Pd(II)-Komplexverbindungen mit den oben genannten Eigenschaften. Vorzugsweise ist die d8-Metallkomplexverbindung deshalb eine Pt(II)- oder Pd(II)-Komplexverbindung, besonders bevorzugt ausgewählt aus einer der Verbindungen PtL1 (Beispiel Nr. 56), PtL3 (Beispiel Nr. 57), PdL1 (Beispiel Nr. 58) und PdL3 (Beispiel Nr. 59), deren Strukturen nachfolgend dargestellt sind:

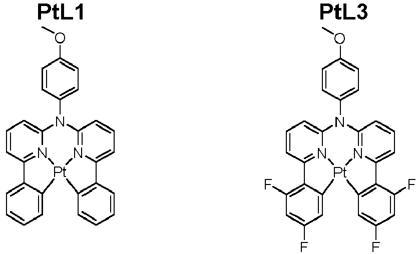

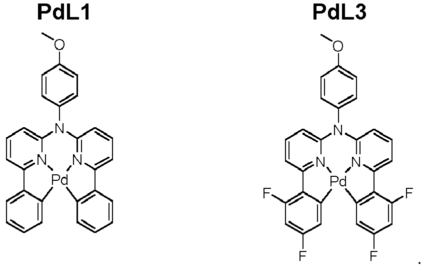

Ganz besonders bevorzugt ist erfindungsgemäß eine Pd(II)-Komplexverbindung ausgewählt aus einer der Verbindungen PdL1 (Beispiel Nr. 58) und PdL3 (Beispiel Nr. 59):

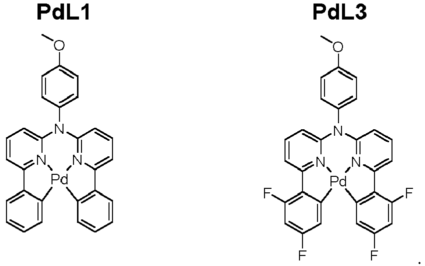

Mit der Erfindung wird eine neue Plattformtechnologie auf der Basis von lumineszenten Reportern bereitgestellt, deren spektrale Lage der Absorption und der Emission im kurzwelligen, sichtbaren und nahinfraroten Spektralbereich, deren Lumineszenzquantenausbeute (und darüber die Lumineszenzintensität), Sauerstoffempfindlichkeit und deren Lumineszenzlebensdauer über das Liganden-kontrollierte Aggregationsverhalten in Lösung und eingebaut in festen oder nanostrukturierten Matrices wie z.B. Polymerfilme oder -Partikeln gesteuert werden kann, wobei aufgrund des Triplettcharakters des leuchtenden Zustandes die Lebensdauern im Mikrosekundenbereich liegen und eine ausgeprägte Stokes-Verschiebung vorhanden ist. Über die Steuerung der Lumineszenzlebensdauer im Mikrosekundenbereich kann u.a. auch die Sauerstoffempfindlichkeit gesteuert werden. Es können mit ein und demselben Luminophor über die Variation der Konzentration selbst-referenzierte bzw. ratiometrische Zweibanden-Sensorsysteme erhalten werden mit einer kürzerwelligen Monomer-Bande und einer längerwellige Aggregat-Bande. Das Intensitäts-Verhältnis dieser zwei spektral sehr gut getrennten und einfach unterscheidbaren Emissionsbanden der monomeren und aggregierten Komplexe, die sich auch in ihrer Lumineszenzabklingkinetik und damit in ihrer Sauerstoffempfindlichkeit unterscheiden (längerlebige Monomer- und kürzerlebige Aggregat-Bande) ist von der Sauerstoff-Konzentration abhängig und kann für die Sauerstoff- Sensorik ausgenutzt werden. Der Einschluss in eine Matrix führt zur Aggregation quadratisch-planarer Komplexe mit d8-Elektronen¬konfiguration (Au(III), Ag(III), Pt(II), Pd(II), Ir(I), Rh(I)-Komplexe) und d-d- Wechselwirkungen, was bei ansonsten in Lösung nicht leuchtenden Komplexe aufgrund der Verringerung der Energie angeregter Zustände die thermische Besetzung löschender metallzentrierter Zustände bei Raumtemperatur verhindert und somit die Photolumineszenzquantenausbeuten erhöht.

In einem weiteren Aspekt stellt die Erfindung Verfahren zur Herstellung von mit lumineszenten d8-Metallkomplexverbindungen beladenen Nano- oder Mikropartikeln, bereit.

Nano- oder Mikropartikel, die aus Polymeren bestehen, können beispielsweise beladen werden, in dem während der Polymerisation d8-Metallkomplexverbindungen zugegeben oder in dem d8-Metallkomplexverbindungen nachträglich nach der Polymerisation in die Partikel eingeschlossen werden. Alle anderen Arten der Beladung von Partikeln mit Farbstoffen, beispielsweise auch von Silika- und Nanoclay-Partikeln, die der Fachperson bekannt sind, sind erfindungsgemäß geeignet, um beladenen Partikel herzustellen.

Ein bevorzugtes Verfahren zum nachträglichen Beladen von Nano- oder Mikropartikeln mit d8-Metallkomplexverbindungen umfasst beispielsweise die Schritte:
a) Dispergieren der Nano- oder Mikropartikel in einem flüssigen Medium;
b) Lösen mindestens einer d8-Metallkomplexverbindung in einem organischen Lösungsmittel;
c) Zugeben der die mindestens eine d8-Metallkomplexverbindung enthaltende Lösung zu der Dispersion der Nano- oder Mikropartikeln gemäß Schritt a) und mischen der Bestandteile;
d) Schrumpfen der Nano- oder Mikropartikel durch weitere Zugabe des flüssigen Medium gemäß Schritt a), vorzugsweise in Wasser oder einer Pufferlösung, wodurch die mindestens eine d8-Metallkomplexverbindung in den Nano- oder Mikropartikel eingekapselt werden.

Das Dispergieren der Nano- oder Mikropartikel in Schritt a) erfolgt vorzugsweise in Wasser oder einem wässrigen Medium, wie beispielsweise einer Pufferlösung. Vorzugsweise wird als flüssiges Medium Wasser benutzt. Das in dem Verfahren der Erfindung verwendete Wasser kann Leitungswasser, gereinigtes Wasser, deionisiertes Wasser oder destilliertes Wasser sein. Bevorzugt wird Reinstwasser, beispielsweise hergestellt mittels einer Milli-Q Wasseraufbereitungsanlage (Merck) verwendet.

Das Lösen der mindestens einer d8-Metallkomplexverbindung gemäß Verfahrensschritt b) erfolgt in einem organischen Lösungsmittel. Geeignete organische Lösungsmittel sind beispielsweise n-Pentan, n-Hexan, Cyclohexan, Cyclopentan, Tetrachlormethan, Diisopropylether, Toluol, Benzol, Diethylether, Dichlormethan (Methylenchlorid), Chloroform, Aceton, Dioxan, Essigsäureethylester (Ethylacetat), Tetrahydrofuran, MTBE (tert-Butylmethylether), Dimethylsulfoxid, Acetonitril, Pyridin, 2-Propanol (Isopropanol), Ethanol, und Methanol. Als besonders geeignet haben sich Essigsäureethylester (Ethylacetat), Tetrahydrofuran, MTBE (tert-Butylmethylether), Dimethylsulfoxid und Acetonitril erwiesen. Besonders bevorzugt ist Tetrahydrofuran.

Das Mischen der die mindestens eine d8-Metallkomplexverbindung enthaltenden Lösung und der Dispersion der Nano- oder Mikropartikeln gemäß Schritt c) kann auf jede geeignete Weise erfolgen. Es hat sich als zweckmäßig erwiesen, das Gemisch über einen längeren Zeitraum, beispielsweise über 20 bis 60 min, vorzugsweise 30 bis 50 min, besonders bevorzugt 40 min, zu schütteln. Während des Mischens wird es den d8-Metallkomplexverbindungen ermöglicht, in die Poren der Nano- bzw. Mikropartikel einzudringen. Die Mischdauer sollte deshalb so lang gewählt werden, dass genügend d8-Metallkomplexverbindungen in die Poren der Nano- bzw. Mikropartikel einzudringen können, um eine ausreichende Beladung der Partikel zu gewährleisten.

Zum Schrumpfen der Nano- oder Mikropartikel in Schritt d) wird das gleiche flüssige Medium wie in Schritt a) verwendet. Durch den Schrumpfungsprozess wird die mindestens eine d8-Metallkomplexverbindung in den Nano- oder Mikropartikeln eingekapselt.

In einer bevorzugten Ausführungsform umfasst das erfindungsgemäße Verfahren die Präzipitation der in Schritt d) gewonnenen, mit mindestens einer d8-Metallkomplexverbindung beladenen Nano- oder Mikropartikel, das anschließende Waschen der beladenen Nano- oder Mikropartikel und das Verdünnen der gewaschenen beladenen Nano- oder Mikropartikel auf eine gewünschte Konzentration.

Die Präzipitation der in Schritt d) gewonnenen, mit mindestens einer d8-Metallkomplexverbindung beladenen Nano- oder Mikropartikel kann beispielsweise durch Zentrifugation erfolgen. Es hat sich als zweckmäßig erwiesen, die Zentrifugation bei 16.000 RZB über einen Zeitraum von mindestens 30 min, vorzugsweise 40 oder 50 min, besonders bevorzugt 60 min durchzuführen.

Das Waschen des Präzipitats kann mit Ethanol/Wasser-Gemischen (beispielsweise mit Volumenverhältnissen von 40/60, 30/70 und 20/80) und/oder mit Reinstwasser erfolgen. Durch das Waschen werden überschüssige, an der Partikeloberfläche adsorbierte d8-Metallkomplexverbindungen entfernt.

Eine geeignete Konzentration der mit den d8-Metallkomplexverbindungen beladenen Nano- oder Mikropartikel liegt bei 5 mg/ml.

In einem weiteren Aspekt betrifft die Erfindung Nano- oder Mikropartikel, die mit mindestens einer d8-Metallkomplexverbindung beladen sind und die mit dem erfindungsgemäßen Verfahren erhältlich sind.

Die so hergestellten Nano- oder Mikropartikel weisen beispielsweise eine Beladungskonzentration C_{L} mit mindestens einer d8-Metallkomplexverbindung im Bereich zwischen 0,1 mM und 4,0 mM auf. Bei dieser Beladungskonzentration liegt der hydrodynamische Durchmesser der erzeugten gefärbten Partikel im Bereich von etwa 130 nm bis 150 nm, bestimmt mittels Dynamischer Lichtstreuung (DLS) mit einem Partikelgrößenmessgerät von Malvern Panalytical.

Die d8-Metallkomplexverbindungen werden innerhalb der Nano- oder Mikropartikel eingeschlossen und die beladenen Partikel sind hoch monodispers, wie durch Transmissionselektronenmikroskopie (TEM) bestätigt werden konnte. Darüber hinaus weisen die Komplexe eine hohe Stabilität in den Partikeln auf, was mittels Stabilitätsuntersuchungen (leaking studies) bewiesen werden konnte.

Die Herstellung von mit Pt(II)- oder Pd(II)-Komplexverbindungen beladenen Polystyren-Nanopartikeln wird beispielhaft in Ausführungsbeispiel 2 beschrieben.

In einer bevorzugten Ausführungsform der Erfindung sind die Nano- oder Mikropartikel ausgewählt aus Micellen oder Polymerpartikeln. Micellen sind zusammengelagerte Molekülkomplexe aus amphiphilen Molekülen bzw. grenzflächenaktiven Substanzen, die in der Regel kugelförmig sind und ggf. im Inneren einen Hohlraum aufweisen. Auch in organischen Lösungsmitteln gibt es Micellen, allerdings mit umgekehrter Orientierung (sogenannte inverse Micellen). Des Weiteren gibt es neben Kugeln viele andere geometrische Formen (Stäbchen, Plättchen etc.) je nach Größen- und Längenverhältnis von hydrophilen Teilen zu hydrophoben Teilen der amphiphilen Moleküle. Micellen sind der Fachpperson grundsätzlich bekannt.

Polymere im Sinne der Erfindung können natürliche oder synthetische Polymere sein.

Natürliche Polymere (Biopolymere) werden in Lebewesen synthetisiert und bilden die Grundbausteine der Organismen. Zu diesen Polymeren zählen beispielsweise Proteine, und Polysaccharide wie Zellulose, Stärke und Chitin.

Synthetische Polymere sind durch Polyreaktionen industriell oder im Labormaßstab hergestellte Stoffe. Dazu gehören Polyethylen, Polystyrol und Polyvinylchlorid. Chemisch modifizierte Polymere werden durch die Weiterverarbeitung von Biopolymeren, gewonnen. Beispiele sind Nitrocellulose, Celluloid oder Stärkederivate.

Polymere können nach der Anzahl der Grundstoffe (Monomere), aus denen sie aufgebaut sind, eingeteilt werden.

Homopolymere bestehen aus nur einer Monomerart wie Polyethylen, Polypropylen, Polyvinylchlorid oder Polycaprolactam. Ein natürliches Homopolymer ist Naturkautschuk als ein Polyisopren.

Copolymere sind aus verschiedenen Monomeren aufgebaut, wie Acrylnitril-Butadien-StyrolCopolymer (ABS), Styrol-Acrylnitril (SAN) oder Butylkautschuk. Die meisten Biopolymere sind Copolymere.

Polymerblends entstehen durch Mischen von unterschiedlichen Homopolymeren und/oder Copolymeren. Hergestellt werden sie meist durch intensive mechanische Vermischung von geschmolzenen Polymeren, wobei sich ein homogenes Material ergibt. Eine besondere Form eines Blends ist eine Polymerlegierung.

Außerdem lassen sich organische von anorganischen Polymeren unterscheiden. Anorganische Polymere enthalten im Gegensatz zu den organischen Polymeren keine Kohlenstoffatome in der Hauptkette des Polymers. Zu den anorganischen Polymeren zählen Polysiloxane, Polyphosphazene oder Polysilazane. Auch Gläser und teilweise auch Keramik und Basalt gelten als anorganische Polymere.

Weitere erfindungsgemäß geeignete Nano- und Mikropartikel sind Silika-Partikel, Liposome und Schichtsilikate wie Nanoclays (Laponite usw.).

Alle genannten Polymere sind grundsätzlich zur Herstellung der erfindungsgemäß mit mindestens einer d8-Metallkomplexverbindung beladenen Nano- oder Mikropartikel geeignet, sofern die Partikel, die aus diesen Polymeren bestehen, porös sind und die Porenweite das Eindringen der d8-Metallkomplexverbindungen in die Poren und damit das spätere Einschließen der d8-Metallkomplexverbindung in den Polymerpartikeln ermöglicht.

Die mit der mindestens einen d8-Metallkomplexverbindung beladenen Nanopartikel weisen eine Größe im Bereich von 5 bis <1000 nm, vorzugsweise von 5 bis 200 nm, mehr bevorzugt im Bereich von 10 bis 150 nm, besonders bevorzugt im Bereich von 10 bis 100 nm auf. Mit der mindestens einen d8-Metallkomplexverbindung beladene Micellen liegen vorzugsweise in einem Größenbereich von 10 bis 20 nm. Die mit mindestens einer d8-Metallkomplexverbindung beladenen Mikropartikel weisen vorzugsweise eine Größe im Bereich von 1 bis < 1000 µm auf. Die angegebenen Größen der Nano- und Mikropartikel haben sich als besonders zweckmäßig in den nachfolgen beschriebenen Verwendungen der Partikel erwiesen.

In einer weiteren bevorzugten Ausführungsform der Erfindung liegt die mindestens eine d8-Metallkomplexverbindung in den Nano- oder Mikropartikeln als Monomer oder als Aggregat oder einer Mischung aus Monomeren und Aggregaten vor. Besonders bevorzugt ist es, wenn die mindestens eine d8-Metallkomplexverbindung in den Nano- oder Mikropartikeln vorzugsweise als Monomer oder Aggregat, wie als Dimer, Trimer, Tetramer oder Multimer vorliegt. Insbesondere bevorzugt ist es, wenn die mindestens eine d8-Metallkomplexverbindung in den Nano- oder Mikropartikeln in einer Mischung aus Monomeren und Aggregaten, wie Dimeren, Trimeren, Tetrameren oder Multimeren vorliegt. Es wurde gefunden, dass die Lumineszenz der Monomere durch Sauerstoff, Lösungsmittel oder bestimmte Analyten gelöscht werden, wohingegen die Lumineszenz der Aggregate, vorzugsweise der Dimere, Trimere, Tetramere oder Multimere durch Sauerstoff nicht beeinflussbar ist. Diese Eigenschaften der erfindungsgemäßen d8-Metallkomplexverbindungen sind besonders vorteilhaft. Sie können beispielsweise dazu verwendet werden, einen einfach herstellbaren Sauerstoffsensor zu konstruieren.

Die erfindungsgemäßen d8-Metallkomplexverbindungen können vorzugsweise auch dazu verwendet werden, um Zellen, Zellbausteine und Makromoleküle zu markieren und mittels Farbänderungen bei Änderungen des Aggregationsverhaltens der d8-Metallkomplexverbindungen nachzuweisen.

Unter Zellen sind sowohl eukaryotische als auch prokaryotische Zellen sowie die Zellen von Einzellern, Mikroorganismen, wie Bakterien und Hefen, als auch Zellen von Tieren, Pflanzen und Pilzen zu verstehen.

Zellbausteine sind z.B. die Zellmembran, das Cytoskelett, Ribosomen, Centriolen und Zellorganellen, wie der Zellkern, die Mitochondrien, Plastiden, das Endoplasmatische Retikulum und der Golgi-Apparat, Lysosomen, Peroxisomen und Vakuolen.

Unter Makromolekülen werden im Sinne der Erfindung vor allem natürliche Moleküle wie Lignin, Polynukleotide wie Nukleinsäuren, Polysaccharide wie Stärke und Zellulose, Peptide und Proteine wie Seide, Collagen, Enzyme und Antikörper verstanden.

Die Anbindung der d8-Metallkomplexe an Zellen, Zellbausteine und Makromoleküle und Partikel erfolgt über alle bekannten chemischen Bindungsarten, beispielsweise über Peptidbindungen.

Die Erfindung stellt mit d8-Metallkomplexen, wie Pt(II) und Pd(II)-Verbindungen, beladene Partikel bereit, die besonders vorteilhaft sind. Durch die chemische Struktur und das Substitutionsmuster des diese Metallionen koordinierenden (eventuell sogar einfach oder doppelt cyclometallierenden) Liganden zeigen die Komplexverbindungen eine unterschiedliche Hydrophilizität und ein unterschiedliches Aggregationsverhalten und bilden Monomore und Aggregate, die sich in ihren optischen Eigenschaften (Absorptionsspektren, Extinktionskoffizienten, Lumineszenzspektren, Lumineszenzquantenausbeuten, Lumineszenzlebensdauern, Sauerstoffsensitivität) stark unterscheiden.

Die erfindungsgemäßen d8-Metallkomplexverbindungen und damit beladene Nano- oder Mikropartikel eignen sich für weitere verschiedenste Anwendungen. Sie können beispielsweise als molekulare multimodale Reporter zum Markieren von biologischen Objekten verwendet werden. Anwendungsbeispiele sind der
- Nachweis von Enzymen, des pH Wertes oder Verbindungen wie Glutathion, lateral flow Assays oder Agglutinat-Assays wie z.B. Schwangerschaftstests, wo die Signalerzeugung über einen Aggregationsprozess, d.h. die Agglutination von mit Komplexen markierten Antikörpern oder Partikeln erfolgt;
- die kontrollierte Freisetzung der d8-Metallkomplexverbindungen aus makromolekularen oder partikulären Trägern, an die sie über spaltbare Gruppen kovalent eng benachbart gebunden sind, z.B.
   ∘ Biomakromoleküle: selektive Spaltung durch entsprechende Enzyme wie bei Enzymkonjugaten. Geeignete Enzyme sind z. B. Glucosidasen, Lipasen, Nukleasen, Proteasen oder Peptidasen wie Matrix-Metalloproteinasen oder Verdauungsenzyme in Makrophagen und Lymphozyten.
   ∘ sogenannte smart oder aktivierbare Sonden (activatable probes), wie mit Metallkomplexen dekorierte Enzym-spezifische Substrate, die beim Aufbrechen Deaggregation verursachen. Beispiele hierfür sind Biomakromoleküle Polycystein- oder Polylysin-Tags, an denen benachbarte Metallkomplexe gebunden sind und die somit als Aggregate leuchten.
   ∘ oxidativ spaltbare Linker, wie Diole, alpha-Hydroxiketone, alpha-Hydroxysäurederivate.
   ∘ Disulfid-Linker: reduktive Spaltung.
   ∘ Hydrazone oder Imine: pH-induzierte Spaltung, d.h. im sauren Milieu spaltbar zu Ketonen und Hydrazin- bzw. Amin-Derivaten.
   ∘ pH-induzierte Spaltung im Lysosom / Endosom oder azidotischen Geweben und Organen (Aufspaltung von Estergruppen, Peptidgruppen)
- das Design von aktivierbaren Sonden, wobei die d8-Metallkomplexverbindungen aggregiert *in vitro* und/oder *in vivo* eingesetzt werden und beispielweise intrazellulär zum Monomer prozessiert werden;
- Änderung des Aggregationszustandes der d8-Metallkomplexverbindungen durch eine unterschiedliche Hydrophilizität oder Hydrophobizität der Umgebung (z.B. beim Anfärben von Zellmembranen usw.). Hydrophobe Monomere aggregieren in wässrigen Umgebungen und monomerisieren in Lipidmembranen oder in hydrophoben Taschen.
- die Drucksensorik, wobei sich die Abstände zwischen den d8-Metallkomplexverbindungen und damit die optischen Eigenschaften ändern. Es erfolgt eine Variation dieser Abstände unterhalb von 3,5 Å (je kürzer der Abstand, desto weiter rotverschoben) und eine komplette, konstante Monomeremission oberhalb von 3,5 Å Abstand.
- Monitoring von Aggregations- bzw. Deaggregationsprozessen, beispielsweise in Gegenwart von bestimmten Proteinen wie BSA oder von Tensiden. In hydrophoben, lipophilen Umgebungen (hydrophobe Taschen von Proteinen, Mizellen, Vesikeln, Zellmembranen, Fettgewebe, Interkalation zwischen Basen von Nukleinsäuren) → Monomerisierung hydrophober Komplexe, die in wässrigen Umgebungen aggregieren (ähnlich wie Stapelung von DNA-Basen).

Die Anbindung der d8-Metallkomplexe erfolgt u.a. durch Analyt-spaltbare oder Stimuliresponsive Linker wie Enzym-spaltbare Peptid-Sequenzen, pH-spaltbare Hydrazon-Linker, oder reduktiv spaltbare Disulfid-Linker oder andere kontrolliert, schnell und quantitative spaltbare chemische Motive aus dem Bereich der drug release Systeme bzw. Wirkstofffreisetzungssysteme.

Unter "aktivierbaren Sonden" werden Sonden verstanden, die ohne Analyten bzw. ohne Wechselwirkung mit einem Analyten kaum oder gar nicht fluoreszent sind und deren Fluoreszenz durch Wechselwirkung mit einem Analyten "angeschaltet" wird. Beispiele sind spezielle Enzymkonjugate, wobei "aktivierbar" in diesem Fall "gelöscht" im gebundenen aggregierten Zustand bedeutet. Bei Bindungsspaltung, Freisetzung und damit Deaggregation erfolgt eine Aktivierung der Fluoreszenz. Im Falle der hier vorliegenden d8-Metallkomplexe bedeutet dies eine unterschiedliche Emissionsfarbe, unterschiedliche Emissionsintensität und eine unterschiedliche Emissionslebensdauer im gebundenen aggregierten und im freigesetzten monomeren Zustand.

Ein weiteres Anwendungsgebiet der d8-Metallkoplexverbindungen ist die Funktionsgruppenanalytik von Nano- und Mikropartikeln, wobei die d8-Metallkoplexverbindungen als multimodale Sonden eingesetzt werden.

Viele Anwendungen von Partikeln in Nanometer- und Mikrometergröße umfassen ihre Oberflächenfunktionalisierung mit Linkern, Sensormolekülen und die Erkennung von Analytsubstanzen wie (Bio-)Liganden. Dies erfordert die Kenntnis der chemischen Natur und der Anzahl der Oberflächengruppen, die für nachfolgende Kopplungsreaktionen zugänglich sind. Besonders attraktiv für die Quantifizierung dieser Gruppen sind spektrophotometrische und fluorometrische Assays, die mit einfachen Methoden ausgelesen werden können.^{28, 29, 30} Die d8-Metallkoplexverbindungen können über spaltbare Linker an konjugierbare Amino- und Carboxylgruppen und andere funktionelle Gruppen auf der Oberfläche der Nano- und Mikropartikeln gekoppelt werden. Dies ermöglicht die Bestimmung von partikelgebundenen Markern, ungebundenen Reportern im Überstand und Reportern, die von der Partikeloberfläche abgespalten wurden, mittels Spektrophotometrie oder im Falle der hier vorliegenden d8-Metallkomplexe auch mittels Fluorometrie. Dabei werden Farbänderungen der Lumineszenz der d8-Metallkoplexverbindungen, die im gebundenen und ungebundenen Zustand auftreten, ausgenutzt.

In einer weiteren Ausführungsform der Erfindung können die Nano- oder Mikropartikel, die mit mindestens einer d8-Metallkomplexverbindung beladen sind, als Reporter und Sensoren für Lumineszenz-basierte Messtechniken und MS-basierte Messtechniken und die Kombination dieser Methoden verwendet werden. Eine weitere Anwendungsmöglichkeit besteht in der Herstellung von multimodalen Kalibrierpartikeln für Lumineszenzmesstechniken und MS-basierte Messtechniken.

Eine weitere bevorzugte Verwendungsmöglichkeit der erfindungsgemäßen Nano- oder Mikropartikel, die mit mindestens einer d8-Metallkomplexverbindung beladen sind, besteht in der Herstellung von spektralen Intensitäts- und Lebensdauer-Codes für Multiplexing und Barcoding-Applikationen, beispielsweise durch Dotierung der Nano- oder Mikropartikel mit verschiedenen Konzentrationen der d8-Metallkomplexverbindungen.

In einer besonders bevorzugten Ausführungsform betrifft die Erfindung die Verwendung der erfindungsgemäßen d8-Metallkomplexverbindungen zur Herstellung von selbst-referenzierten Sensor-Systemen, wie beispielsweise für den Nachweis von Sauerstoff, beispielsweise durch Dotierung von Partikeln oder festen Matrices wie Filmen, wobei die Intensitäten der spektral unterscheidbaren Emissionsbanden von monomeren und aggregierten Komplexverbindungen ausgelesen werden. Dabei ist die kürzerwellige und längerlebige Monomer-Emission in der Regel Sauerstoff-sensitiv und die längerwellige und kürzerlebige Emission der aggregierten Komplexe in der Regel unabhängig von der Sauerstoff-Konzentration.

Weiterhin eignet sich die erfindungsgemäßen Nano- oder Mikropartikel, die mit mindestens einer d8-Metallkomplexverbindung beladen sind, für die multimodale Bildgebung mit multiplen orthogonalen Readouts wie TEM /SEM, Lumineszenz, MS für die biomedizinische Diagnostik von hypoperfundierten / hypoxische Geweben oder Organen einschließlich Tumoren, Infektionsherden und Thrombose-bedingten Erkrankungen.

Dier Erfindung wird nachfolgend anhand von 7 Figuren und mehreren Ausführungsbeispielen erläutert.

### Kurze Beschreibung der Figuren

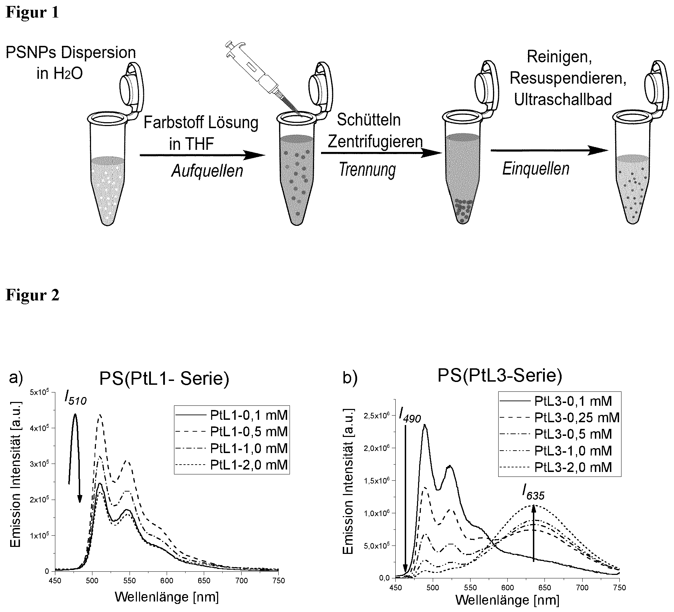

- Figur 1: zeigt eine schematische Darstellung eines einstufigen Färbeverfahrens mit 100 nm PSNPs.
- Figur 2: zeigt a) Lumineszenz-Emissionsspektren von PSNPs der PtL1-Serie bei 405 nm Anregung mit der gleichen Partikelkonzentration von 1 mg/ml in MilliQ-Wasser. b) Lumineszenz-Emissionsspektren der PS(PtL3-Serie) unter 388 nm Anregung mit der gleichen Partikelkonzentration von 1mg/ml MilliQ Wasser.

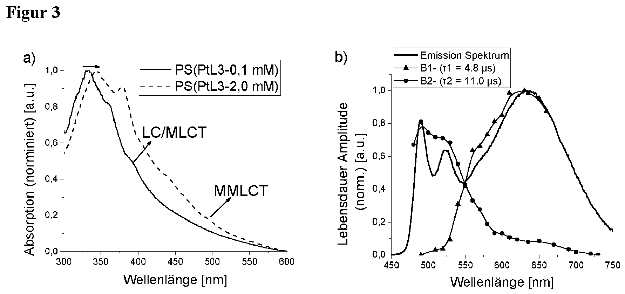

- Figur 3: zeigt a) Absorptionsspektren von PSNPs der PS(PtL3-Serie) mit einer Beladungskonzentration von 0,1 mM (durchgezogene Linie) und 2,0 mM (gestrichelte Linie). b) Lebensdaueramplituden von PS(PtL3-0,5 mM) aufgetragen als Funktion der Emissionswellenlänge, zusammen mit dem Emissionsscan (durchgezogene Linie). Die Amplitude B1 (Linie mit Dreiecken) entspricht der Gesamtlebensdauer von τ 1 = 4,8 µs und die Amplitude B2 (Linie mit runden Punkten) beschreibt die Monomer-Verteilung mit der Lebensdauer von τ2 = 11,0 µs

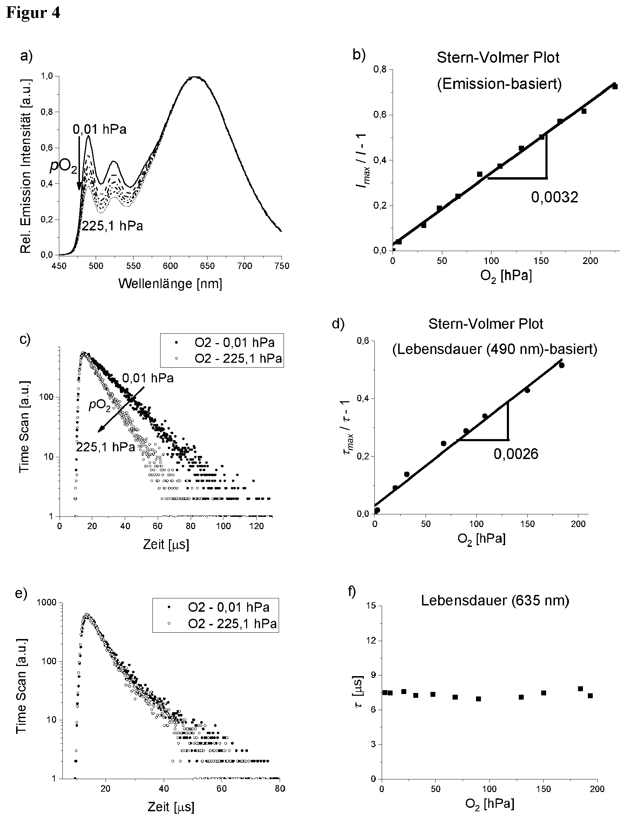

- Figur 4: zeigt a) die Reaktion der Emissionsintensität von PS(PtL3-0,5 mM) auf den Sauerstoffpartialdruck; b) Emissionsbasierter Stern-Volmer-Plot; c) Lebensdauer (490 nm) als Reaktion auf den Sauerstoffpartialdruck; d) Lebensdauer (490 nm) als Stern-Volmer-Plot, e) Lebensdauer bei 635 nm und f) Lebensdauer bei 635 nm als Funktion des Sauerstoffpartialdrucks.

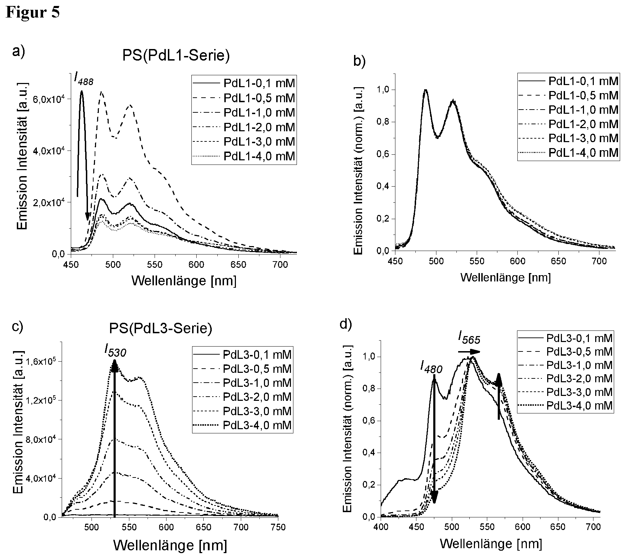

- Figur 5: zeigt a) Lumineszenz-Emissionsspektren von PSNPs der PdL1-Serie bei 335 nm Anregung mit der gleichen Partikelkonzentration von 1 mg/ml in MilliQ-Wasser; b) Normalisierte Emissionsspektren der PS(PdL1-Serie); c) Lumineszenz-Emissionsspektren der PSNPs der PdL3-Serie bei 368 nm Anregung mit der gleichen Partikelkonzentration von 1 mg/ml MilliQ-Wasser; d) Normierte Emissionsspektren der PS(PdL3-Serie).

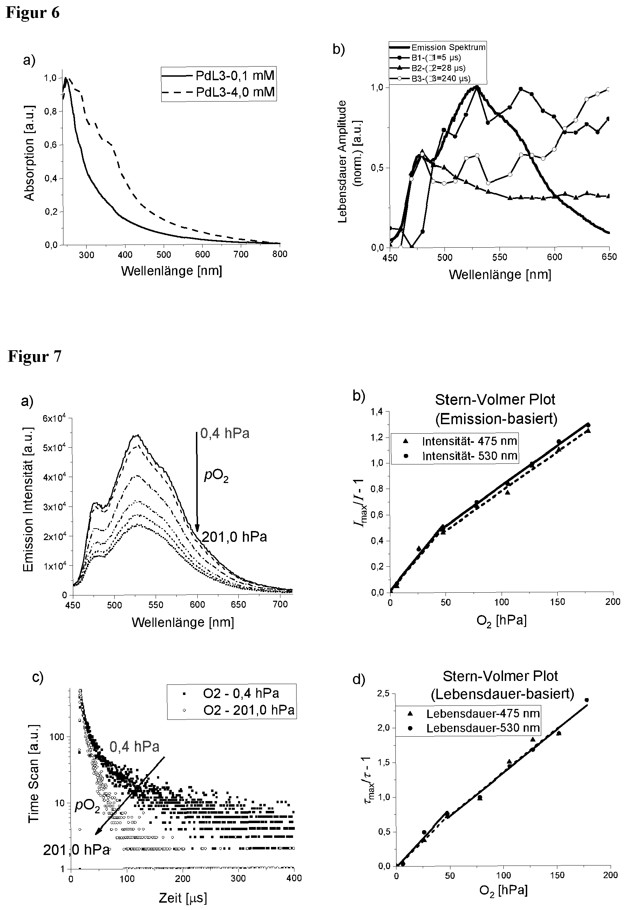

- Figur 6: zeigt a) Absorptionsspektren von PSNPs der PdL3-Serie mit PdL3-Beladungskonzentration CL von 0,1 mM (schwarz) bis 4,0 mM (gestrichelte Linie) mit CL auftretend (durchgezogene Linie); b) Lebensdaueramplituden von entgastem PS(PdL1-0,5 mM) aufgetragen als Funktion der Emissionswellenlänge, zusammen mit dem Emissions-Scan (durchgezogene Linie). Die Amplitude B1 (Linie mit gefüllten Punkten) entspricht der festen Lebensdauer von *τ₁* = 5 µs, B2 (Linie mit Dreiecken) beschreibt die Lebensdauer-Komponente von *τ₂* = 28 µs, während B3 (Linie mit leeren Punkten) der Komponente mit einer Lebensdauer von 240 µs zugeordnet ist.

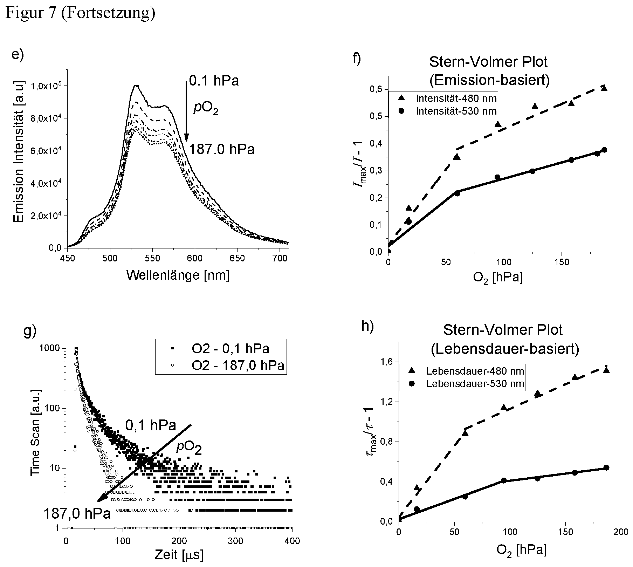

- Figure 7: zeigt Stern-Volmer-Studien von PS(PdL3-0,5 mM) und PS(PdL3-4,0 mM). a) Antwort der Emissionsintensität von PS(PdL3-0,5 mM) auf den Sauerstoffpartialdruck; b) Emissionsintensität *I₄₇₅*- und *I₅₃₀*-basierte Stern-Volmer-Plots; c) Lebensdauer *τ₄₇₅* Antwort auf den Sauerstoffpartialdruck; d) Lebensdauer (*τ₄₇₅* und -τ*₅₃₀*)-basierte Stern-Volmer-Plots; e) Antwort der Emissionsintensität von PS(PdL3-4,0 mM) auf den Sauerstoffpartialdruck; f) Emissionsintensität *I₄₈₀*- und *I₅₃0*-basierte Stern-Volmer-Plots; g) Lebensdauer (*τ₄₈₀*) Antwort auf den Sauerstoffpartialdruck h) Lebensdauer (*τ₄₈₀* und *τ₅₃₀*)-basierte Stern-Volmer-Plots.

### Ausführungsbeispiele

### Beispiel 1: Synthese und strukturelle Charakterisierung von Pt(II)- und Pd(II)-Komplexen

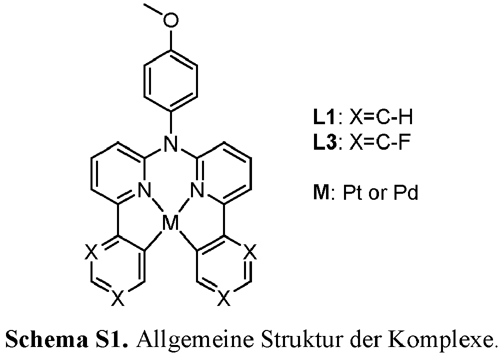

Alle Reagenzien waren von analytischer Qualität und wurden wie erhalten verwendet. Die Säulenchromatographie wurde mit Kieselgel 60 (Partikelgröße 35-70 µm, 230-400 mesh, Merck) durchgeführt. NMR und Massenspektren wurden vom Fachbereich Organische Chemie der Universität Münster gemessen. Die NMR-Spektren wurden auf einer DPX/Avance 300 oder einer Avance 400 von Burker Analytische Messtechnik für den Vorläufer und auf einem DD2 500 und DD2 600 von Agilent für die Pt(II)-Komplexe aufgenommen. Die chemischen ^{1H-}NMR- und 13C-NMR-Verschiebungen (δ) der Signale werden in Teilen pro Million angegeben und beziehen sich auf Restprotonen im deuterierten Lösungsmittel: DMSO-d₆ (2,50 ppm und 39,5 ppm). Die ¹⁹F-NMR-Chemikalienverschiebungen werden auf CFCl₃ als interner Standard referenziert. Die Signalmultiplizitäten werden wie folgt abgekürzt: s, Singulett; d, Dublett; t, Triplett; q, Quartett; m, Multiplett. Alle Kopplungskonstanten (J) sind in Hertz angegeben. Die hochauflösende Massenspektrometrie (HRMS) wurde mittels Elektrospray-Ionisation (ESI) auf einem Bruker Daltonics MicroTof mit Schleifeninjektion durchgeführt.

### Liganden-Vorstufen

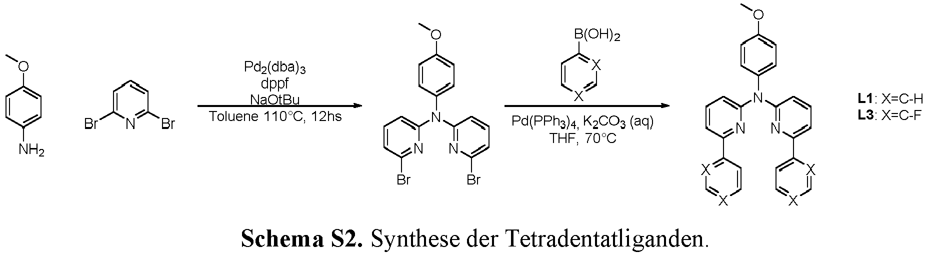

### N,N-Di(2-bromopyrid-6-yl)-4-methoxyanilin (1):

2,6-Dibrompyridin (4,930 g, 20,8 mmol), Pd2(dba)₃ (0,154 g, 0,168 mmol), 4-Methoxyanilin (1,064 g, 8,62 mmol) und NaOtBu (2,323 g, 23,20 mmol), 1,1'-Bis(diphenylphosphino)ferrocen (0,196 g, 0,354 mmol) wurden in Toluol (100 ml) unter Argonatmosphäre kombiniert. Das Reaktionsgemisch, das während des Erhitzungsprozesses entgast wurde, reagierte bei 110°C für 12-14 h und lieferte eine dunkelbraune Lösung. Bei Raumtemperatur wurde die Lösung gefiltert und in Wasser (100 ml) gegossen, der Rückstand wurde mit Ethylacetat (EtOAc) gewaschen. Die wässrige Phase wurde mit EtOAc (3X50 ml) extrahiert. Die kombinierten organischen Phasen wurden mit Wasser (25 ml) und Sole (25 ml) gewaschen, mit MgSO₄ getrocknet, filtriert, konzentriert und die Rohverbindung wurde an Kieselgel adsorbiert. Dieses wurde auf eine mit Kieselgel gepackte Säule geladen, um eine säulenchromatographische Trennung mit Cyclohexan/EtOAc (9: 1) durchzuführen und einen gelben Feststoff (1,269 g) zu erhalten. Ausbeute: 34 %.

¹H-NMR (300 MHz, Methylenchlorid-d₂) δ 7,41 (dd, J = 8,2, 7,6 Hz, 2H), 7,16 - 7,12 (m, 2H), 7,10 (dd, J = 7,6, 0,7 Hz, 2H), 7,01 - 6,92 (m, 4H), 3,84 (s, 3H).
¹³C NMR (75 MHz, Methylenchlorid-d₂) δ 158.99, 157.75, 140.06, 139.87, 136.50, 129.97, 122.22, 115.61, 115.08, 56.00.
HRMS (ESI+, MeOH, m/z) berechnet für [M + H]⁺, 435.94777; gefunden, 435.94785; berechnet für [M + Na]⁺, 457.92971; gefunden, 457.92979; berechnet für [M + K]⁺, 473.90365; gefunden, 473.90340

### N,N-Di(2-phenylpyrid-6-yl)-3,5-methoxyanilin (L1):

1 (323 mg, 0,74 mmol), Pd(PPh3)₄ (109 mg, 0,0094 mmol) und die entsprechende Phenylboronsäure (236 mg, 1,94 mmol) wurden in THF (50 ml) kombiniert und durch Argon-Blasenentfernung entgast. Die Lösung wurde bis zum Rückfluss erhitzt und wässriges K₂CO₃ (2M, 3ml) wurden unter Ar-Fluss zugegeben. Das Reaktionsgemisch wurde 12 h lang unter Rückfluss erhitzt, um eine gelbe Lösung zu erhalten. Danach wurde THF unter reduziertem Druck entfernt und der Niederschlag in EtOAc (50ml) gelöst und die Lösung mit Wasser (50ml) und Sole (50 ml) gewaschen. Die organische Phase wurde mit MgSO₄ getrocknet, filtriert, konzentriert und die Rohverbindung wurde an Kieselgel adsorbiert. Diese wurde auf eine mit Kieselgel gepackte Säule geladen, um eine säulenchromatographische Trennung mit Cyclohexan/EtOAc als Elutionsmittel (20:1) durchzuführen und einen weißen Feststoff (238 mg) zu erhalten. Ausbeute: 75 %.

¹H-NMR (400 MHz, Methylenchlorid-d₂) δ 7,81 - 7,75 (m, 4H), 7,55 (dd, *J* = 8,2, 7,6 Hz, 2H), 7,33 - 7,22 (m, 8H), 7,19 - 7,15 (m, 2H), 6,96 (dd, *J=* 8,3, 0,7 Hz, 2H), 6,93 - 6,88 (m, 2H), 3,76 (s, 3H).
HRMS (ESI+, MeOH, m/z) berechnet für [M + H]⁺, 430.19139; gefunden, 430.19108; berechnet für [M + Na]⁺, 452.172; gefunden, 452.17290; berechnet für [2M + Na]⁺, 881.35745; gefunden, 881.35786.

### N,N-di(2-(2,4-Difluorphenyl)pyrid-6-yl)-4-methoxyanilin (L3):

Dasselbe für L1 beschriebene Verfahren wurde angepasst. Die Säulenchromatographie wurde an Siliciumdioxid mit Cyclohexan/Ethylacetat (100:1) als Elutionsmittel durchgeführt, was einen gelben Feststoff ergab. Ausbeute: 84 %.

¹H-NMR (300 MHz, DMSO-d₆) δ 7,74 - 7,64 (m, 2H), 7,56 (t, *J=* 7,9 Hz, 2H), 7,34 (ddd, *J* = 7,6, 2,4, 0,8 Hz, 2H), 7,18 - 7,11 (m, 2H), 6,97 - 6,87 (m, 3H), 6,86 - 6,76 (m, 3H), 3,76 (s, 3H). ¹⁹F-NMR (282 MHz, DMSO-d₆) δ -113.46 (d, J = 8,3 Hz), -115.08 (d, J = 8,5 Hz).
HRMS (ESI+, MeOH, m/z) berechnet für [M + H]⁺, 502.15370; gefunden, 502.15392; berechnet für [M + Na]⁺, 524.13565; gefunden, 524.13546.

### Komplexe

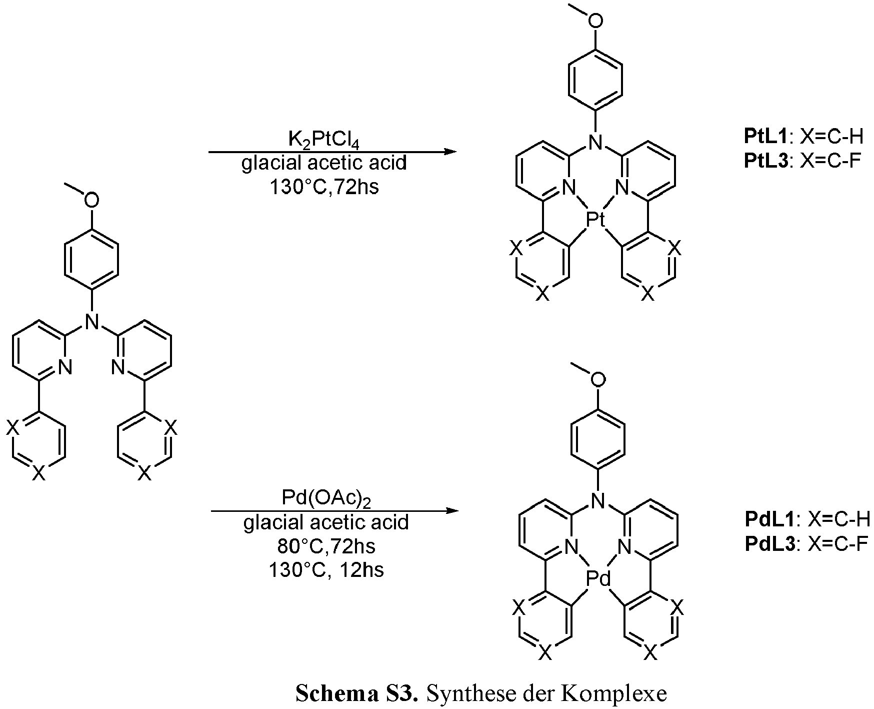

### PtL1:

Eine Mischung der tetradentaten Ligandenvorstufe **L1** (100 mg, 0,233 mmol), K₂PtCl₄ (106 mg mg, 0,256 mmol) und NBu₄Cl (10 mg, 0,034 mmol) wurde 48-60 h in Eisessig (15 ml) unter Rückfluss in Eisessig (15 ml) aufgelöst. Nach Abkühlung der orangefarbenen Lösung auf Raumtemperatur wurde das Lösungsmittel auf ein Minimum entfernt, es bildeten sich rotorange Ausfällungen, die abfiltriert und mehrmals mit Wasser gewaschen wurden, um den Komplex C1 zu erhalten. Dieser wurde auf eine mit Kieselgel gepackte Säule geladen, um eine säulenchromatographische Trennung mit CH₂Cl₂ als Elutionsmittel durchzuführen, um einen gelben Feststoff (84 mg) zu erhalten Ausbeute: 58 %.

¹H-NMR (600 MHz, DMSO-d₆) δ 8,20 (d, *J=* 7,0 Hz, 1H), 8,02 (dd, *J=* 8,7, 7,6 Hz, 2H), 7,96 (dd, *J* = 8,0, 1,4 Hz, 2H), 7,94 - 7,91 (m, 2H), 7.58 - 7,55 (m, 2H), 7,36 (td, *J* = 7,3, 1,4 Hz, 2H), 7,34 - 7,31 (m, 2H), 7,17 (td, *J* = 7,5, 1,2 Hz, 2H), 6,62 (dd, *J* = 8,7, 0,9 Hz, 2H), 3,92 (s, 3H).
¹³C NMR (150 MHz, DMSO-d₆) δ 163.20, 160.57 - 159.30 (m), 149.59, 148.95, 147.37, 138.32, 135.80, 131.80, 129.33, 124.92 - 123.93 (m), 123.35, 117.17, 114.78, 56.08.
HRMS (ESI+, MeOH, m/z) berechnet für [M + H]⁺, 623.14077; gefunden, 623.14122

### PtL3:

Dasselbe für **PtL1** beschriebene Verfahren wurde angepasst. Die Säulenchromatographie wurde an Siliciumdioxid mit CH₂Cl₂ als Elutionsmittel durchgeführt und ergab einen gelborangenen Feststoff. Ausbeute: 55 %.
¹H-NMR (500 MHz, DMSO-d₆) δ 8.07 (dd, *J=* 8,8, 7,7 Hz, 2H), 7.97 (dt, *J=* 7,9, 1,1 Hz, 2H), 7.59 (dd, *J* = 9,3, 2,5 Hz, 2H), 7.56 - 7,52 (m, 2H), 7,32 - 7,29 (m, 2H), 6,96 (ddd, *J* = 12,9, 9,2, 2,4 Hz, 2H), 6,75 (dd, *J* = 8,7, 0,9 Hz, 2H), 3,94 (s, 3H).
¹³C-NMR (125 MHz, DMSO-d₆) δ 162.7, 160.3, 160.3, 158.9, 154.83, 149.2, 139.3, 135.6, 131.7, 130.2, 117.3, 116.8, 116.1, 115.4, 99.3, 56.1.
¹⁹F-NMR (470 MHz, DMSO-d₆) δ -108,4 (d, *J* = 9,6 Hz), -109,4 (d, *J* = 9,7 Hz).
HRMS (ESI+, MeOH, m/z) berechnet für [M + H]⁺,694.09525; gefunden, 694.09533; berechnet für [M + Na]⁺, 717.08502; gefunden, 717.08575.

### PdL1:

Ein Gemisch aus der tetradentaten Ligandenvorstufe **L1** (100 mg, 0,233 mmol) und Palladium(II)-acetat (54 mg, 0,239 mmol) wurde in Eisessig (15 ml) für 72 h erhitzt und nach Rückfluss bei 130 °C für 12 h. Nach Abkühlung auf Raumtemperatur wurde das Lösungsmittel entfernt. Das Rohprodukt wurde auf eine mit Kieselgel gepackte Säule geladen, um eine säulenchromatographische Trennung mit CH₂Cl₂ als Elutionsmittel durchzuführen und einen gelben Feststoff (7 mg) zu erhalten. Ausbeute: 6%.

¹H-NMR (500 MHz, DMSO-d₆) δ 8,05 (dd, *J=* 7,7, 1,3 Hz, 2H), 7,91 (dd, *J=* 7,8, 1,4 Hz, 2H), 7,90 - 7,86 (m, 4H), 7,52 (d, *J* = 8.8 Hz, 2H), 7,32 (dd, *J* = 7,4, 1,3 Hz, 2H), 7,29 (d, *J* = 8,8 Hz, 2H), 7,19 - 7,14 (m, 2H), 6,46 (dd, *J* = 6,7, 2,8 Hz, 2H), 3,91 (s, 3H).
¹³C NMR (125 MHz, DMSO-d₆) δ 162.46, 161.43, 160.09, 151.55, 147.95, 139.48, 135.74, 135.49, 131.84, 129.21, 124.63, 124.02, 117.19, 114.43, 112.46, 56.08.
HRMS (ESI+, MeOH, m/z) berechnet für [M + H]⁺, 534.08033; gefunden, 534.07960

### PdL3:

Ein Gemisch aus dem tetradentaten Ligandenvorläufer **L3** (173 mg, 0,345 mmol) und Palladium(II)-acetat (78 mg, 0,047 mmol) wurde in Eisessig (15 ml) 72 h lang und nach Rückfluss bei 130 °C 12 h lang erhitzt. Nach Abkühlung auf Raumtemperatur wurde das Lösungsmittel entfernt. Das Rohprodukt wurde auf eine mit Kieselgel gepackte Säule geladen, um eine säulenchromatographische Trennung mit CH₂Cl₂ als Elutionsmittel durchzuführen, um einen gelben Feststoff (25 mg) zu erhalten. Ausbeute: 12 %.

¹H-NMR (500 MHz, DMSO-d₆) δ 7,92 (t, *J* = 8,2 Hz, 2H), 7,86 (d, *J* = 7,9 Hz, 2H), 7,49 (d, *J* = 8,8 Hz, 2H), 7,40 (dd, *J* = 8.2, 2,4 Hz, 2H), 7,31 - 7,26 (m, 2H), 6,97 (ddd, *J* = 12,1, 9,1, 2,3 Hz, 2H), 6,53 (d, *J=* 8,7 Hz, 2H), 3,91 (s, 3H). 19F-NMR (376 MHz, DMSO-d6) δ -108,73 (q, *J=* 9,0 Hz).
¹³C-NMR (126 MHz, DMSO-d₆) δ 167.1, 162.2, 159.8, 158.4, 151.7, 140.2, 135.7, 131.8, 117.3, 117.3, 116.0, 115.2, 100.5, 56.2.
¹⁹F-NMR (470 MHz, DMSO-d₆) δ -108.72 (d, *J* = 8,9 Hz), -108.79 (d, *J* = 8,9 Hz). HRMS (ESI+, MeOH, m/z) berechnet für [M + H]⁺, 606.04205; gefunden, 606.04264

### Beispiel 2: Synthese und strukturelle Charakterisierung von Nanopartikeln

### Material und Methoden

100 nm große aminierte Polystyrol-Nanopartikel (PS-NH₂) wurden kommerziell erhalten von der Micromod GmbH (Deutschland).

Die Herstellung der mit Pt(II)- oder Pd(II)-Komplex beladenen Nanopartikel ist in Figur 1 dargestellt. Die hochgradig hydrophoben Komplexe einschließlich PtL1, PtL3, PdL1 und PdL3 wurden in 100 nm großen aminierten Polystyrol-Nanopartikeln (PS-NH₂) über eine einfache einstufige Färbeprozedur eingekapselt¹. 3 mg PS-NH₂ wurden in Milli-Q Wasser auf 2,5 mg/ml (1,2 ml) dispergiert. Der Pt(II)- oder Pd(II)-Komplex wurde in Tetrahydrofuran (THF) gelöst, wobei die anfängliche Beladungskonzentration C_{L} zwischen 0,1 mM und 2,0 mM und schließlich bis 4,0 mM lag. Dann wurden 200 µL Metallkomplexlösung zur PS-NH₂-Dispersion hinzugefügt und die Probe anschließend 40 Minuten lang geschüttelt. Das Schrumpfen der Partikel wurde durch die Zugabe von 200 µL Milli-Q Wasser zur Dispersion induziert, wodurch die komplexen Moleküle in den PS-NH₂-Partikeln eingekapselt wurden. Die Partikel wurden dann 60 Minuten lang bei 16.000 RZB zentrifugiert (Zentrifuge 5415D, Eppendorf, Deutschland). Das Präzipitat wurde dreimal mit Ethanol/Wasser-Gemischen Volumenverhältnisse von 40/60, 30/70 und 20/80) und einmal mit Milli-Q-Wasser gewaschen, um überschüssigen, an der Partikeloberfläche adsorbierten Farbstoff zu entfernen. Schließlich wurden die mit Pt(II)- oder Pd(II)-Komplex beladenen PS-NH₂-Partikel auf 5 mg/ml (600 µL) verdünnt.

Mit zunehmender Farbstoffbeladungskonzentration von 0,1 mM auf 2,0 mM und schließlich auf 4,0 mM liegt der hydrodynamische Durchmesser der erzeugten gefärbten Partikel im Bereich von etwa 130 nm bis 150 nm, bestimmt mittels Dynamischer Lichtstreuung (DLS) mit einem Partikelgrößenmessgerät von Malvern Panalytical. Die Metallkomplexe wurden innerhalb der Polystyrol-Nanopartikel (PSNPs) eingeschränkt, und die beladenen PSNPs sind hoch monodispers, wie durch Transmissionselektronenmikroskopie (TEM) bestätigt wurde. Darüber hinaus haben die Komplexe eine hohe Stabilität in den PSNPs, was mittels Leckuntersuchungen bewiesen werden konnte.

### Technische Ausstattung

### Absorptionsmessungen

Die Absorptionsspektren der Metallkomplex-Moleküle und der gefärbten PSNPs-Dispersionen wurden mit einem kalibrierten Cary 5000 Spektrometer gemessen. Die Menge des in den PSNPs eingekapselten Metallkomplexes wurde aus den Absorptionsspektren gefärbter Partikelproben in DMF (Dimethylformamid) und den molaren Absorptionskoeffizienten der Spezies ermittelt, die zuvor durch Absorptionsmessungen von Konzentrationsreihen der Emitter bestimmt wurden, wobei DMF als Lösungsmittel gelöste PSNPs enthielt.

### Lumineszenzspektren, Lebensdauer- und Quantenausbeute-Messungen

Lumineszenzspektren und Zerfallskinetiken wurden mit den kalibrierten² Spektrofluorometern FSP 920 und FLS 980 von Edinburgh Instruments gemessen. Für die Messung der Emissionsspektren wurde eine kontinuierliche Xenonlampe als Anregungslichtquelle am FSP 920 und FLS 980 eingesetzt, während die zeitaufgelösten Lumineszenzmessungen mit einer µs-Xenon-Blitzlampe am FSP 920 und einem EPLED-Laser (375 nm) am FLS durchgeführt wurden, wobei beide in einem Mehrkanal-Skalierungsmodus detektiert wurden. Die Lumineszenzabfälle wurden durch mono-exponentielle Anpassung der erhaltenen Abklingkurven mit dem Programm FAST (Fluorescence Analysis Software Technology, Edinburgh Instruments Ltd.) analysiert. Absolute Lumineszenzquantenausbeuten wurden mit der kommerziellen Ulbrichtkugelanordnung Quantaurus-QY C11347-11 von Hamamatsu³⁻⁵ und speziellen Langhalsküvetten des Geräteherstellers (1x1 cm, Quarz) erzielt. Die relativen Standardabweichungen der Lumineszenz-Quantenausbeute-Messungen wurden auf ± 5 % geschätzt. Alle Lumineszenzmessungen wurden in diesen Langhals-Quarzküvetten mit einem Präzisionsdichtungs-Gummiseptum (Sigma-Aldrich) bei Raumtemperatur durchgeführt, sofern nicht anders angegeben.

### Bestimmung des O₂-Partialdrucks

Die Sauerstoffkonzentration wurde für Stern-Volmer-Studien variiert, indem die gefärbte PSNPs-Dispersion mit Argon in einer versiegelten Langhalsküvette gespült wurde. Der Sauerstoffpartialdruck wurde mit einem kommerziellen faseroptischen Sauerstoffmessgerät Firesting O₂ von PyroScience und einer lösungsmittelbeständigen Spitze der Sauerstoffsonde (OXSOLVPT) bestimmt.

### Beispiel 3: Nanopartikel-Fotophysik und Anwendungen - PtL1 & PtL3

Durch Einkapselung der beiden Pt(II)-Komplexe in die PSNPs werden die photophysikalischen Eigenschaften dieser Metallkomplexe mit deutlich erhöhter absoluter Lumineszenzquantenausbeute und verlängerter Lebensdauer verbessert (Tabelle 2). Vergleicht man die Pt(II)-Komplex-gefärbten PSNPs mit der Komplexlösung in THF (Tetrahydrofuran), z.B. PS(PtL3-0,1 mM) mit der niedrigsten PtL3-Beladungskonzentration CL von 0,1 mM, so erhöht sich die absolute Quantenausbeute unter Luftsättigung um den Faktor 26, während die entgaste PS(PtL3-0,1 mM) eine Quantenausbeute von 79,3% erreichen kann. Die Lumineszenzlebensdauer beider Pt(II)-Komplexe wird im Bereich von einigen hundert ns in THF-Lösung auf ca. 10 µs in den PSNPs unter Luftsättigung verlängert. Mögliche Erklärungen für diese verbesserten optischen Eigenschaften der Komplexe sind folgende: Zum einen kann die Verkapselung der Komplexe in PSNPs die Molekülversteifung verstärken, bei der die Molekülschwingungen aufgrund der sterischen Begrenzung unterbunden sind. Dadurch werden strahlungsfreie Zerfälle oder Löschungen, die durch Molekülschwingungen verursacht werden, gehemmt und die lumineszierenden Eigenschaften verstärkt. Andererseits wurden selbst bei der niedrigsten komplexen Beladungskonzentration (0,1 mM) auch nach den spektroskopischen Untersuchungen (Figur 2b) und der Quantenausbeutebestimmung Aggregate der PS(PtL3-Serie) gebildet.

**Tabelle 2: Lumineszenz-Quantenausbeuten und Lebensdauerdaten von Pt(II)-Komplexen und gefärbten PSNPs^{[a]}**

| Mittel (RT) | PtL1 (λexc. 405 nm) | | | | PtL3 (λexc. 388 nm) | | | | | |
|---|---|---|---|---|---|---|---|---|---|---|
| | ΦLum. [%] | | [c] | | ΦLums. [%] | | [c] | | [c] | |
| | Luft | Ar | Luft | Ar | Luft | Ar | Luft | Ar | Luft | Ar |
| in THF | 1,4 | 51,4 | 0,11 | 4,00 | 1,8 | 46,9 | 0,25 | 8,06 | - | - |
| C_{L}^{[b]}: 0,1 mM | 36,0 | 55,1 | 8,97 | 12,17 | 47,3 | 79,3 | 10,28 | 15,10 | 7,52 | 9,94 |
| CL: 0,5 mM | 23,4 | 32,7 | 8,99 | 11,50 | 61,5 | 72,1 | 10,77 | 15,34 | 6,71 | 6,57 |
| CL: 1,0 mM | 14,5 | 19,8 | 9,67 | 11,66 | 59,1 | 66,2 | 9,79 | 14,57 | 6,70 | 6,84 |
| CL: 2,0 mM | 7,9 | 10,9 | 8,90 | 11,59 | 64,6 | 70,3 | 10,05 | 14,30 | 7,66 | 7,96 |

| | | | | | | | | | | |
|---|---|---|---|---|---|---|---|---|---|---|
| [a]: Die gefärbten PSNPs wurden in MilliQ-Wasser mit einer Partikelkonzentration von 0,25 mg/ml dispergiert. [b]: Anfängliche Beladungskonzentration des Metallkomplexes in den PSNPs. [c]: Die Lebensdauer τ510 und τ490 wurden mono- exponentiell, die Lebensdauer τ635 bi- exponentiell angepasst. | | | | | | | | | | |

Bei einer Erhöhung der Beladungskonzentration CL von 0,1 mM auf 2,0 mM und schließlich auf 4,0 mM zeigen die Pt(II)-Komplexe PtL1- und PtL3-gefärbten PSNPs ein unterschiedliches optisches Verhalten, das durch verschiedene aggregationsinduzierte Prozesse verursacht wird. Mit zunehmender PtL1-Beladungskonzentration neigt der Komplex dazu, in den PSNPs zu aggregieren, während die Emissionsintensität der PS(PtL1-Serie) zunimmt (CL von 0,1 mM auf 0,5 mM) und anschließend abnimmt (CL von 0,5 mM auf 2,0 mM) (Figur 2a)). Dieses Phänomen wird normalerweise durch die Aggreations-verursachte Löschung (Aggregation-Caused-Quenching (ACQ)) aufgrund intermolekularer π-π -Wechselwirkungen der planaren aromatischen Ringe auf dem Liganden verursacht. ⁶⁻⁸

Die angeregten Zustände des PtL1-Aggregats unterliegen einem strahlungsfreien Zerfall, was zu einer geringeren Lumineszenzquantenausbeute (Tabelle 1) und einer gequenchten, d.h. unterdrükten Emissionsintensität führt. Bei der Überwachung der hydrophoben Lösungsmittelumgebung durch Zugabe von Wasser in THF-Lösung des PtL1-Komplexes (0,02 mM) wurde ACQ mit der wässrigen Fraktion *fw* von 90% beobachtet. Im Vergleich zu PtL1-beladenen PSNPs weisen PSNPs der PtL3-Serie auf einen weiteren aggregationssinduzierten Prozess hin: Mit steigender PtL3-Beladungskonzentration in den PSNPs zeigt das gebildete PtL3-Aggregat eine verstärkte aggregationsinduzierte rote Emissionsbande bei 635 nm, während die grüne Emissionsbande des PtL3-Monomers bei 490 nm unterdrückt wird (Figur 2b)), was zu einer kolorimetrischen Veränderung der PS(PtL3-Serie) Proben von grün nach orange bis gelb führt. Bei den Messungen der Quantenausbeute wurde auch die Abnahme des Monomers und die Zunahme der Aggregatkomponente erfasst Dasselbe kolorimetrische Verhalten wurde mit PtL3 in einer THF/H₂O-Mischung simuliert, indem der *fw*-Wert von 0 bis 90% überwacht wurde. Der neu gebildete angeregte Zustand wird durch Metall-Metall-Ligand-Ladungstransfer (Metal-Metal-to-Ligand Charge Transfer, MMLCT) erzeugt, der durch die Pt•••Pt-Wechselwirkung entsteht. Es wurde berichtet, dass die Bildung von MMLCT stark vom Pt•••Pt-Abstand abhängt, der typischerweise unter 3,5 Å^{9,10} liegt. Im vorliegenden System ermöglichen die vier F-Atome auf dem PtL3-Liganden die Wasserstoffbrückenbindungswechselwirkungen zwischen den planaren Liganden und verkürzen somit den Pt•••Pt-Abstand im Aggregat und bilden den MMLCT-angeregten Zustand. Die bathochromatische Verschiebung und das Vorhandensein des langwelligen Absorptionsschwanzes werden normalerweise dem niedrigsten angeregten Zustand von MMLCT¹¹⁻¹³ zugeordnet, die hier mit den Absorptionsspektren der PtL3-beladenen PSNPs bestätigt wurden (Figur 3a)).

Um einen besseren Einblick in die Monomer/Aggregat-Verteilung des Komplexes in den PSNPs zu erhalten, wurde die exponentielle Zersetzung zu Ende geführt. Lebensdauermessungen von z. B. PS(PtL3-0,5 mM) wurden unter Luftsättigung entlang der Emissionswellenlänge von 480 nm bis ca. 700 nm erhalten, die den Hauptemissionsbereich sowohl des Monomers als auch des Aggregats abdeckt. Durch die bi-exponentielle Anpassung der Lebensdauern mit einer festen Aggregatlebensdauer von τ₁ = 4,8 µs und einer Monomerlebensdauer von τ₂ = 11,0 µs wurden die resultierenden Lebensdaueramplituden für die beiden Komponenten B1 und B2 als Funktion der Emissionswellenlänge aufgetragen (Figur 3b)). Die Lebensdaueramplituden des PtL3-Aggregats (B1) und des Monomers (B2) folgen den Emissionsbanden bei 635 nm bzw. 490 nm, was einen Überblick über den dynamischen Beitrag von Monomer und Aggregat entlang der Emissionswellenlänge gibt.

Interessanterweise kann die grüne Phosphoreszenz-Emission des PtL3-Monomers bei 490 nm durch Triplett-Sauerstoff über einen Energietransfer vom Dexter-Typ gequencht, d.h. gelöscht werden, während der aggregierungsinduzierte MMLCT-angeregte Zustand bei 635 nm die Empfindlichkeit gegenüber reinem Sauerstoff aufgrund der kurzen Lebensdauer zeigt. Dadurch wird ein selbstreferenzierter Sauerstoffsensor realisiert, wobei die Emissionsintensität und Lebensdauer bei 490 nm die Sauerstoffreaktion ausdrückt und der Emissionszustand bei 635 nm als sauerstoffinertes Referenzsignal verwendet wird. Studien zur Sauerstoffempfindlichkeit von PS(PtL3-0,5 mM) auf der Grundlage der Emissionsintensität und Lebensdauer bei 490 nm sind in Abbildung 4 dargestellt. Bei einem unterschiedlichen Sauerstoffpartialdruck von 0,01 hPa bis zur Luftsättigung (225,1 hPa) erzeugt die ratiometrische Anzeige des *I₄₉₀*/*I₆₃₅* eine lineare Stern-Volmer-Kurve mit einem Steigungswert *K_{SV}* von 0,0032, während die Lebensdauerantwort bei τ₄₉₀ auf Sauerstoff zu einem linearen Stern-Volmer-Plot mit dem *K_{SV}* Wert von 0,0026 führt. Darüber hinaus bestätigt der Plot von τ₆₃₅ gegen den Sauerstoffpartialdruck die Sauerstoffunempfindlichkeit des MMLCT-Emissionszustandes (Figur 4d)). Ein lebensdauerbasierter Sauerstoffsensor wird im Allgemeinen bevorzugt, indem viele potenzielle Signalverzerrungen und Artefakte eliminiert werden, z. B. durch Minimierung der Hintergrundsignale und Ausschluss von Einflüssen von Änderungen der Sensormolekülkonzentration und der Anregungslichtintensität.¹⁴ Wichtiger ist, dass die Phosphoreszenz-Lebensdauer im µs-Bereich eine hohe Genauigkeit bei der O₂-Erfassung gewährleistet. Durch die Überwachung der PtL3-Beladungskonzentration in PSNPs kann das grün/rote Emissionsverhältnis für anwendungsrelevante Anforderungen gesteuert werden.

Die Stern-Volmer-Studien der PS(PtL3-Serie) wurden abgeschlossen und die generierten Kalibrierungsparameter in Tabelle 3 zusammengestellt. Im Vergleich mit dem emissionsbasierten *Ksv* verhalten sich die lebensdauerbasierten *K_{SV}* nachweislich unabhängig von der komplexen Beladungskonzentration, was bestätigt, dass die sauerstoffsensorischen Eigenschaften des PtL3-Monomers nicht durch das Aggregat beeinflusst werden. Dennoch nimmt die τ*_{490,max}* mit zunehmender Beladungskonzentration leicht ab und führt somit zu einem Anstieg der Stern-Volmer-Konstante *K_{q}.* Dies könnte auf den verringerten Monomeranteil zurückzuführen sein, da Aggregate mit kürzerer Lebensdauer die Emissionsbänder tendenziell dominieren. Stern-Volmer-Untersuchungen der PS(PtL1-Serie) ergaben, dass die *K_{SV}* und *K_{q}* Werte von PtL1 kaum durch CL und ACQ beeinflusst werden.

**Tabelle 3: Stern-Volmer-Steilheit und Stern-Volmer-Konstantenwerte der PS(PtL3-Serie)**

| Beispiele | τ*490, maximal* | Stern-Volmer-Hang Ksv [hPa⁻¹] | | Stern-Volmer-Konstante *Kq**[hPa⁻¹s⁻¹] |
|---|---|---|---|---|
| | | Emissionsbasierte | Lebenszeit -basierte | |
| PS(PtL3-0,1 mM) | 15.67 | 0.0039 ± 0.0001 | 0.0026 ± 0.0001 | 165.92 |
| PS(PtL3-0,25 mM) | 15.10 | 0.0022 ± 0.0001 | 0.0025 ± 0.0001 | 165.56 |
| PS(PtL3-0,5 mM) | 15.34 | 0.0032 ± 0.0001 | 0.0026 ± 0.0001 | 169.49 |
| PS(PtL3-1,0 mM) | 14.57 | 0.0030 ± 0.0001 | 0.0026 ± 0.0001 | 178.45 |
| PS(PtL3-2,0 mM) | 14.30 | 0.0030 ± 0.0001 | 0.0026 ± 0.0001 | 181.82 |

| | | | | |
|---|---|---|---|---|
| *: *K_{q}* = *K_{SV}*/*τₘₐₓ* | | | | |

### Beispiel 4: Nanopartikel-Fotophysik und Anwendungen - PdL1 & PdL3

Beide Pd(II)-Komplexe zeigen in THF-Lösung eine geringe Lumineszenz mit einer Quantenausbeute von unter 0,5 %, jedoch können diese Komplexe durch Einkapselung in die PSNPs aufgehellt werden und so eine Quantenausbeute von 11,5% bzw. 6,4% bei entgasten PS(PdL1-0,1 mM) und PS(PdL3-3,0 mM) erreichen (Tabellen 4 und 5). Darüber hinaus können die Standzeiten *τ₄₈₈* und *τ₅₂₀* von entgasten PS(PdL1-Serien) über 100 µs erreichen, die um 300-fach höher sind im Vergleich zu den freien PdL1-Molekülen in THF. Bei der PS(PdL 3-Serie) sind die Lebensdauern *τ₄₈₀* und *τ₅₃₀* in THF-Lösung ebenfalls von einigen wenigen ns auf Dutzende µs erhöht. Ähnlich wie bei den mit Pt(II)-Komplexen beladenen PSNPs könnte die Verbesserung der optischen Eigenschaften beider Pd(II)-Komplexe durch die molekulare Steifigkeit in den PSNPs erzeugt werden, wo die durch Molekülschwingungen verursachten strahlungsfreien Zerfallswege reduziert werden, oder durch das in den PSNPs gebildete stärker lumineszierende Aggregat unterstützt werden.

**Tabelle 4: Daten der Ausbeute an Lumineszenzquantenausbeuten mit dem Pd(II)-Komplex PdL1 und gefärbten PSNPs^{[a]}**

| Medium (RT) | PdL1 (λ_{exc}. 335 nm) | | | | | | | |
|---|---|---|---|---|---|---|---|---|
| | *φ*_{Lum}. [%] | | *τ₄₈₈*^{[c]} [µs] | | *τ₅₂₀*^{[c]} [µs] | | *τ₅₆₁*^{[c]} [µs] | |
| | Luft | Ar | Luft | Ar | Luft | Ar | Luft | Ar |
| in THF | 0,2 | 0,4 | 0,11 | 0,37 | -^{[d]} | -^{[d]} | -^{[d]} | -^{[d]} |
| C_{L}^{[b]}: 0.1 mM | 2,3 | 11,5 | 19,46 | 113,39 | 21,02 | 111,70 | 20,34 | 108,39 |
| C_{L}: 0.5 mM | 3,0 | 8,8 | 32,66 | 113,15 | 32,34 | 116,00 | 32,34 | 117,86 |
| C_{L}: 1.0 mM | 1,1 | 2,5 | 44,65 | 119,24 | 44,57 | 112,98 | 41,22 | 114,22 |
| C_{L}: 2.0 mM | 0,7 | 2,4 | 21,31 | 119,08 | 23,73 | 116,14 | 21,29 | 108,22 |
| C_{L}: 3.0 mM | 0,7 | 2,2 | 25,97 | 120,63 | 23,57 | 114,12 | 21,37 | 109,00 |
| C_{L}: 4.0 mM | 0,5 | 1,6 | 22,70 | 108,09 | 22,06 | 106,72 | 20,03 | 111,54 |

**Tabelle 5: Daten der Ausbeute an Lumineszenzquantenausbeuten mit dem Pd(II)-Komplex PdL3 und gefärbten PSNPs^{[a]}**

| Medium (RT) | PdL3 (λ_{exc}. 368 nm) | | | | | | | |
|---|---|---|---|---|---|---|---|---|
| | *Φ*_{Lum}. [%] | | *τ₄₈₀* ^{[c]} [µs] | | *τ₅₃₀* ^{[c]} [µs] | | *τ₅₆₅* ^{[c]} [µs] | |
| | Luft | Ar | Luft | Ar | Luft | Ar | Luft | Ar |
| in THF | 0,1 | 0,5 | 7,7E-3 | 13,1E-3 | 9,1E-3 | 17,7E-3 | 10,2E-3 | 16,6E-3 |
| C_{L}^{[b]}: 0.1 mM | 1,5 | 4,6 | 10,61 | 78,12 | 11,78 | 90,35 | 18,08 | 106,38 |
| C_{L}: 0.5 mM | 2,2 | 5,6 | 14,18 | 70,55 | 15,33 | 86,65 | 20,25 | 79,00 |
| C_{L}: 1.0 mM | 2,7 | 5,5 | 13,38 | 61,40 | 16,17 | 76,69 | 17,43 | 73,23 |
| C_{L}: 2.0 mM | 3,2 | 6,0 | 14,75 | 48,05 | 16,56 | 67,38 | 16,08 | 71,19 |
| C_{L}: 3.0 mM | 3,7 | 6,4 | 16,41 | 44,78 | 19,52 | 62,93 | 22,6 | 67,67 |
| C_{L}: 4.0 mM | 4,0 | 5,7 | 16,46 | 39,98 | 22,91 | 50,69 | 24,4 | 54,07 |

| | | | | | | | | |
|---|---|---|---|---|---|---|---|---|
| ^{[a]}: Die gefärbten PSNPs wurden in MilliQ-Wasser mit einer Partikelmassenkonzentration von 0,25 mg/ml dispergiert. ^{[b]}: Anfängliche Beladungskonzentration des Metallkomplexes in den PSNPs. ^{[c]}: Die Lebensdauern von PdL1 und PdL3 wurden triexponentiell angepasst und amplitudengewichtet berechnet. ^{[d]}: Das Abklingsignal war zu schwach, um gemessen zu werden. | | | | | | | | |

Ähnlich wie bei den beiden Pt(II)-Komplexen wurde bei den mit Pd(II)-Komplexen beladenen PSNPs eine Selbstaggregation beobachtet. Bei Erhöhung der PdL1- und PdL3-Beladungskonzentration CL weisen die PSNPs der PdL1-Serie und der PdL3-Serie unterschiedliche Aggregationswege auf. Bei der PS(PdL1-Serie) sank die Quantenausbeute der entgasten Probe durch Modulation des CL von 0,1 mM auf 4,0 mM von 11,5% auf 1,6% (Tabelle 3), was zusammen mit der abgeschwächten Emissionsintensität (CL von 0,5 mM auf 4,0 mM) (Figur 5a) und den kaum beeinflussten Lebensdauern *τ₄₈₈, τ₅₂₀* und *τ₅₆₁* beweist, dass ACQ wiederum durch intermolekulare π-π -Wechselwirkungen der Liganden entstand. Durch Normierung der Emissionsintensität von entgastem PSNP der PdL1-Serie zeigen die Emissionsspektren eine Unabhängigkeit von der Beladungskonzentration, nämlich von der PdL1-Aggregation (Abbildung 5a), Inlay). Durch Injektion von Wasser in eine PdL1-Lösung in THF (0,02 mM) bildete PdL1 mit zunehmendem Wasseranteil *fw* zunächst ein lumineszierendes Aggregat, und die Lumineszenz wurde anschließend auf ACQ gequencht (Figur 5a) oberer Inlay). Im Gegensatz dazu zeigten die PSNPs der PdL3-Serie durch Variation der CL von 0,1 mM bis 4,0 mM verbesserte optische Eigenschaften mit Verbesserungen der Quantenausbeute von 1,5% bis 4,0% bzw. 4,6% bis 6,4% unter Luft und Ar-Sättigung, begleitet von leicht verlängerten Lebensdauern *τ₄₈₀, τ₅₃₀* und *τ₅₆₅* unter Luftsättigung (Tabelle 3). Die amplitudengewichteten durchschnittlichen Lebensdauern der entgasten Proben zeigten jedoch eine deutliche Tendenz zur Abnahme mit zunehmender CL, was auf den erhöhten Aggregatanteil zurückzuführen sein könnte, der im Vergleich zum Monomer in PSNPs eine kürzere Lebensdauer aufweist. Inzwischen wurde auch die Emissionsintensität mit zunehmendem CL verstärkt (Figur 5b). Die Lumineszenzverstärkung kann in THF/H₂O (*fw* = 73%) mit zunehmender PdL3-Konzentration simuliert werden. Interessanterweise nahm in den normierten Emissionsspektren der PS(PdL3-Reihe) *I₄₈₀* mit höherem CL ab, während *I₅₆₅* aufzutreten begann und die Emissionsbande um 530 nm bathochromisch zu verschieben schien (Figur 5b) oberes Inlay). Diese Rotverschiebung könnte jedoch durch die ratiometrische Änderung zweier spektroskopisch gut überlappender Emissionszustände, die zu Monomer bzw. Aggregat gehören, beigetragen haben. Es ist zu vermuten, dass ein neuer angeregter Zustand auch in dem in PSNPs gebildeten PdL3-Aggregat erzeugt wurde, nämlich der MMLCT-angeregte Zustand, der aufgrund der schwachen intermolekularen Pd•••Pd-Wechselwirkungen einen energetisch etwas niedrigeren Emissionszustand einnimmt¹⁵. Ähnlich wie bei PtL3 wird die Verkürzung des Metall•••Metall-Abstands durch die Wasserstoffbindungs-Wechselwirkungen ermöglicht, die durch vier F-Atome am L3-Liganden verursacht werden. Der Anstieg der Absorption nach 370 nm mit zunehmender CL kann dem neu gebildeten Grundzustand von MMLCT zugeordnet werden (Figur 6a)). Die Untersuchung der exponentiellen Zersetzung von PS (PdL3-0.5 mM) zeigt die Verteilung der Lebensdauer-Komponenten entlang der Emissionswellenlänge (Figur 6b)). Die Amplitude B1 (*τ₁* = 5 µs) zeigt das Verhalten bei ca. 530 nm und 565 nm, jedoch mit alleinigem Beitrag bei ca. 480 nm, was eine Koinzidenz mit den normierten Emissionsspektren der PS(PdL3-Serie) (Figure 5b) oben) zeigt, mit abgeschwächter Emission *I₄₈₀,* leichter Rotverschiebung bei ca. 530 nm und Auftreten von *I₅₆₅* entlang der zunehmenden CL, was bestätigt, dass die Lebensdauer-Komponente mit *τ₁* = 5 µs dem Aggregat zugeordnet ist. Sowohl die Amplitude B2 (*τ₂* = 28 µs) als auch B3 (*τ₃* = 240 µs) weisen einen Peak bei ca. 480 nm auf, was ihre Erzeugung aus PdL3-Monomer unterstützt.

### Beispiel 5: Untersuchung der Sauerstoffreaktion der mit Pd(II)-Komplexen beladenen PSNPs

Zur Untersuchung der Sauerstoffreaktion der mit Pd(II)-Komplexen beladenen PSNPs wurden Stern-Volmer-Studien der PS(PdL1-Serie) und PS(PdL3-Serie) durchgeführt. Es wurde festgestellt, dass die Stern-Volmer-Plots beider Komplexe getrennt in zwei Abschnitten anstatt einer linearen Anpassung angepasst wurden. Dies ist eine Folge des Multi-Exponenten-Beitrags in jedem Komplex, der eine unterschiedliche Sauerstoffempfindlichkeit zeigt. Entsprechend den Lumineszenzabklingkurven der in THF gelösten Pd(II)-Komplexe wurden die Lebensdauern tri-exponentiell angepasst. Unterschiedliche Lebensdauer-Komponenten könnten eine unterschiedliche Sauerstoffreaktion anzeigen, so dass das gesamte Stern-Volmer-Plot von verschiedenen Komponenten in verschiedenen Sauerstoffpartialdruckbereichen dominiert werden könnte.

Für die PS(PdL1-Serie) wurde unabhängig von der ACQ keine spektrale Veränderung beobachtet und die Lebensdauer zeigte eine Unabhängigkeit von der CL oder der Aggregation, was auf ähnliche optische Eigenschaften wie das PdL1-Monomer hinweist. Infolgedessen zeigten die *K_{SV}* und *K_{q}* von PdL1 im Wesentlichen eine Abhängigkeit von der CL und der Aggregation. Im Gegensatz dazu zeigten die Stern-Volmer-Plots im Hinblick auf die PSNPs der PdL3-Serie einen signifikanten Unterschied mit zunehmender CL. Bei niedriger CL, z. B. PS(PdL3-0,5 mM) und bei Einstellung des Sauerstoffpartialdrucks von 0,1 hPa bis 201,0 hPa kann die Sauerstoffreaktion durch die Emissionsintensität und die Lebensdauer ausgedrückt werden (Figur 7a) und Inlay in 7c)), und Stern-Volmer-Studien auf der Grundlage von *I₄₇₅* (und *τ₄₇₅*) und *I₅₃₀* (und *τ₅₃₀*) haben im Wesentlichen den gleichen *K_{SV}*- und *K_{q}*-Wert (Abbildung 7b) und c)). Dennoch unterscheiden sich bei Erhöhung des Sauerstoffpartialdrucks von 0,1 hPa auf 187,0 hPa die *K_{SV}-* (und *Kq-)* Werte, die aus SV-Plots auf der Basis von *I₄₈₀* (und *τ₄₈₀*) und *I₅₃₀* (und *τ₅₃₀*) abgeleitet wurden, bei PS(PdL3-4,0 mM) deutlich voneinander (Figur 7d), e), f) und Inlay in f)). Die aus *I₅₃₀* (oder *τ₅₃₀*) abgeleiteten KSV-Werte zeigen eine hohe Tendenz zur Abnahme mit zunehmender CL. Dies lässt sich wahrscheinlich durch den erhöhten Beitrag der Emissions des Aggregates von PdL3 erklären, der eine geringere Sauerstoffempfindlichkeit aufweist, was wiederum beweist, dass die Emissionsbande bei ca. 530 nm sowohl von monomeren als auch aggregierten Emissionszuständen gestützt wird. Darüber hinaus wird die *K_{SV}* des zweiten Abschnitts, die von *I*_{*475*/*480*} (oder *τ*_{*475*/*480*}) abgeleitet ist, sanfter. Möglicherweise können eine oder mehrere Lebensdauer-Komponenten des PdL3-Monomers durch die Aggregation beeinflusst werden.

### Referenzen

(1) Behnke, T.; Würth, C.; Laux, E.-M.; Hoffmann, K.; Resch-Genger, U. Simple strategies towards bright polymer particles via one-step staining procedures. Dyes and Pigments 2012, 94, 247-257. (2) Resch-Genger, U.; Bremser, W.; Pfeifer, D.; Spieles, M.; Hoffmann, A.; DeRose, P. C.; Zwinkels, J. C.; Gauthier, F.; Ebert, B.; Taubert, R. D.; Monte, C.; Voigt, J.; Hollandt, J.; Macdonald, R. State-of-the art comparability of corrected emission spectra. 1. Spectral correction with physical transfer standards and spectral fluorescence standards by expert laboratories. Anal. Chem. 2012, 84, 3889-3898.
(3) Wurth, C.; Geissler, D.; Behnke, T.; Kaiser, M.; Resch-Genger, U. Critical review of the determination of photoluminescence quantum yields of luminescent reporters. Anal. Bioanal. Chem. 2015, 407, 59-78.
(4) Würth, C.; Pauli, J.; Lochmann, C.; Spieles, M.; Resch-Genger, U. Integrating Sphere Setup for the Traceable Measurement of Absolute Photoluminescence Quantum Yields in the Near Infrared. Analytical Chemistry 2012, 84, 1345-1352.
(5) Wurth, C.; Gonzalez, M. G.; Niessner, R.; Panne, U.; Haisch, C.; Genger, U. R. Determination of the absolute fluorescence quantum yield of rhodamine 6G with optical and photoacoustic methods-- providing the basis for fluorescence quantum yield standards. Talanta 2012, 90, 30-37.
(6) Zong, L.; Xie, Y.; Wang, C.; Li, J. R.; Li, Q.; Li, Z. From ACQ to AIE: the suppression of the strong pi-pi interaction of naphthalene diimide derivatives through the adjustment of their flexible chains. Chem Commun (Camb) 2016, 52, 11496-11499.
(7) Mei, J.; Leung, N. L.; Kwok, R. T.; Lam, J. W.; Tang, B. Z. Aggregation-Induced Emission: Together We Shine, United We Soar! Chem Rev 2015, 115, 11718-11940.
(8) Förster, T.; Kasper, K. Ein Konzentrationsumschlag der Fluoreszenz. Zeitschrift für Physikalische Chemie 1954, 1, 275-277.
(9) Mauro, M.; Aliprandi, A.; Septiadi, D.; Kehr, N. S.; De Cola, L. When self-assembly meets biology: luminescent platinum complexes for imaging applications. Chem Soc Rev 2014, 43, 4144-4166.
(10) Chaaban, M.; Zhou, C.; Lin, H.; Chyi, B.; Ma, B. Platinum(ii) binuclear complexes: molecular structures, photophysical properties, and applications. Journal ofMaterials Chemistry C 2019, 7, 5910-5924.
(11) Ding, J.; Pan, D.; Tung, C.-H.; Wu, L.-Z. Synthesis and Photophysical Studies of Calix[4]arene- based Binuclear Platinum(II) Complexes: Probing Metal-Metal and Ligand-Ligand Interactions. Inorg. Chem. 2008, 47, 5099-5106.
(12) Chen, Y.-Z.; Pan, D.; Chen, B.; Wang, G.-X.; Tung, C.-H.; Wu, L.-Z. Synthesis, Characterization, and Selective Sr2+ Sensing Study of Copper(I)-Bridged Calix[4]arene-Based Binuclear Alkynylplatinum(II) Complexes. European Journal of Inorganic Chemistry 2017, 2017, 5108-5113.
(13) W., J. K.; T., G. J.; A., S. J.; J., L. S. Metallointercalation reagents. Synthesis, characterization, and structural properties of thiolato(2,2',2"-terpyridine)platinum(II) complexes. J. Am. Chem. Soc. 1976, 98. 20, 6159-6168.
(14) Stich, M. I. J.; Schäferling, M.; Wolfbeis, O. S. Multicolor Fluorescent and Permeation-Selective Microbeads Enable Simultaneous Sensing of pH, Oxygen, and Temperature. Adv. Mater. 2009, 21, 2216-2220.
(15) Wan, Q.; To, W. P.; Yang, C.; Che, C. M. The Metal-Metal-to-Ligand Charge Transfer Excited State and Supramolecular Polymerization of Luminescent Pincer Pd(II)-Isocyanide Complexes. Angew Chem Int Ed Engl 2018, 57, 3089-3093.
(16) Molina, N. et al., Platinum-Doped Dendritic Structure as a Phosphorescent Label for Bacteria in Two-Photon Excitation Microscopy. ACS Omega 2019, 4, 13027-13033.
(17) Cebrián, C. et al., Luminescent Neutral Platinum Complexes Bearing an Asymmetric N ^N ^ N Ligand for High-Performance Solution-Processed OLEDs. Adv. Mater. 2013, 25, 437-442.
(18) Strassert, C. A. et al., Switching On Luminescence by the Self-Assembly of a Platinum(II) Complex into Gelating Nanofibers and Electroluminescent Films. Angew. Chem. Int. Ed. 2011, 50, 946 -950.
(19) Sanning, J. et al., Scanning-Tunneling-Spectroscopy-Directed Design of Tailored Deep-Blue Emitters; Angew. Chem. Int. Ed. 2015, 54, 786 -791.
(20) Sanning, J. et al, Colour-tunable asymmetric cyclometalated Pt(II) complexes and STMassisted stability assessment of ancillary ligands for OLEDs. J. Mater. Chem. C, 2016, 4, 2560.
(21) Mydlak, M. et al., Controlling Aggregation in Highly Emissive Pt(II) Complexes Bearing Tridentate Dianionic N^N^N Ligands. Synthesis, Photophysics, andElectroluminescence. Chem. Mater. 2011, 23, 3659-3667
(22) Galstyan, A. et al., Correlating the Structural and Photophysical Features of Pincer Luminophores and Monodentate Ancillary Ligands in PtII Phosphors. Eur. J. Inorg. Chem. 2015, 5822-5831.
(23) Ewen, P. R. et al., Unraveling Orbital Hybridization of Triplet Emitters at the Metal-Organic Interface. Physical Review Letters 111, 267401 (2013).
(24) Wilde, S. et al., Toward Tunable Electroluminescent Devices by Correlating Function and Submolecular Structure in 3D Crystals, 2D-Confined Monolayers, and Dimers. ACS Appl. Mater. Interfaces 2018, 10, 22460-22473.
(25) Ren, J. et al., On-Surface Reactive Planarization of Pt(II) Complexes. Angew. Chem. Int. Ed. 2019, 58, 15396 -15400.
(26) Wilde, S. et al., Fluorination-controlled Aggregation and Intermolecular Interactions in Pt(II) Complexes with Tetradentate Luminophores. Isr. J. Chem. 2018, 58, 932 -943.
(27) Wilde, S. et al., Studie über den Einfluss des Fluorierungsgrades an einem tetradentaten C^N∗N^C-Luminophor auf die photophysikalischen Eigenschaften seiner Platin(II)-Komplexe und deren Aggregation. Z. Naturforsch. 2018; 73(11)b: 849-863.
(28) Moser, M., et al. (2016). "Ellman's and Aldrithiol Assay as Versatile and Complementary Tools for the Quantification of Thiol Groups and Ligands on Nanomaterials." Analytical Chemistry 88(17): 8624-8631.
(29) Moser, M., et al. (2018). "Multimodal Cleavable Reporters versus Conventional Labels for Optical Quantification of Accessible Amino and Carboxy Groups on Nano- and Microparticles." Analytical Chemistry 90(9): 5887-5895.
(30) Nirmalananthan-Budau, N., et al. (2019). "Multimodal Cleavable Reporters for Quantifying Carboxy and Amino Groups on Organic and Inorganic Nanoparticles." Scientific Reports 9.
(31) Resch-Genger, U., et al. (2008). "Quantum dots versus organic dyes as fluorescent labels." Nature Methods 5(9): 763-775.
(32) Eisfeld, A. and J. S. Briggs (2006). "The J- and H-bands of organic dye aggregates." Chemical Physics 324(2-3): 376-384.
(33) Kobayashi, H., et al. (2010). "New Strategies for Fluorescent Probe Design in Medical Diagnostic Imaging." Chemical Reviews 110(5): 2620-2640.
(34) Berezin, M. Y. and S. Achilefu (2010). "Fluorescence Lifetime Measurements and Biological Imaging." Chemical Reviews 110(5): 2641-2684.
(35) Tang, Y. H., et al. (2015). "Development of fluorescent probes based on protectiondeprotection of the key functional groups for biological imaging." Chemical Society Reviews 44(15): 5003-5015.
(36) Gao, P., et al. (2019). "Fluorescent probes for organelle-targeted bioactive species imaging." Chemical Science 10(24): 6035-6071.
(37) Wolfbeis, O. S. (2015). "An overview of nanoparticles commonly used in fluorescent bioimaging." Chemical Society Reviews 44(14): 4743-4768.
(38) Feng, G. X. and B. Liu (2018). "Aggregation-Induced Emission (AIE) Dots: Emerging Theranostic Nanolights." Accounts of Chemical Research 51(6): 1404-1414.
(39) Gu, B. B., et al. (2018). "Strategies to Overcome the Limitations of AIEgens in Biomedical Applications." Small Methods 2(9).
(40) Kwok, R. T. K., et al. (2015). "Biosensing by luminogens with aggregation-induced emission characteristics." Chemical Society Reviews 44(13): 4228-4238.
(41) Bünzli, J. C. G. and C. Piguet (2005). "Taking advantage of luminescent lanthanide ions." Chemical Society Reviews 34(12): 1048-1077.
(42) Sy, M., et al. (2016). "Lanthanide-based luminescence biolabelling." Chemical Communications 52(29): 5080-5095.
(43) Bünzli, J. C. G. (2016). "Lanthanide light for biology and medical diagnosis." Journal of Luminescence 170: 866-878.
(44) Otto, S., et al. (2015). "Cr(ddpd)(2) (3+): A Molecular, Water-Soluble, Highly NIR-Emissive Ruby Analogue." Angewandte Chemie-International Edition 54(39): 11572-11576.
(45) Baumgart, S., et al. (2017). "Dual-labelled antibodies for flow and mass cytometry: A new tool for cross-platform comparison and enrichment of target cells for mass cytometry." European Journal of Immunology 47(8): 1377-1385.
(46) Wang, C., et al. (2019). "Luminescent TOP Nanosensors for Simultaneously Measuring Temperature, Oxygen, and pH at a Single Excitation Wavelength." Analytical Chemistry 91(3): 2337-2344.
(47) Napp, J., et al. (2011). "Targeted Luminescent Near-Infrared Polymer-Nanoprobes for In Vivo Imaging of Tumor Hypoxia." Analytical Chemistry 83(23): 9039-9046.
(48) Schäferling, M. (2012). "The Art of Fluorescence Imaging with Chemical Sensors." Angewandte Chemie International Edition 51: 2-25.
(49) Kage, D., et al. (2018). "Luminescence lifetime encoding in time-domain flow cytometry." Scientific Reports 8: 16715.
(50) Shikha, S., et al. (2017). "Versatile design and synthesis of nano-barcodes." Chemical Society Reviews 46(22): 7054-7093.
(51) Gangadharappa, S. C. et al., J. Am. Chem. Soc. 2020, 142, 21353-21367.
(52) Proetto, M. T.et al., Chem. Commun., 2019, 55, 501

## Patentansprüche

1. Verwendung einer d8-Metallkomplexverbindung der allgemeinen Formel (1) : 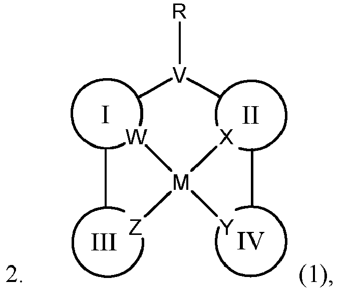 wobei
I, II, III, IV unabhängig voneinander ausgewählt sind aus C₅ Aryl, C₆ Aryl, C₅ Heteroaryl und C₆ Heteroaryl; wobei jedes der Ringatome, außer W, X, Y und Z, unabhängig voneinander optional substituiert sein kann mit Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
V, W, X, Y und Z unabhängig voneinander ausgewählt sind aus O, B, C, und N;
R ausgewählt ist aus Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
M ausgewählt ist aus Pt(II), Pd(II), Au(III), Ag(III), Rh(I) und Ir(I);
oder einer d8-Metallkomplexverbindung der allgemeinen Formel (2) : 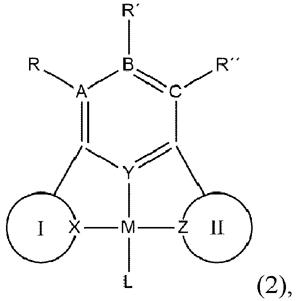 wobei
I, II, III, IV unabhängig voneinander ausgewählt sind aus C₅ Aryl, C₆ Aryl, C₅ Heteroaryl und C₆ Heteroaryl; wobei jedes der Ringatome, außer X und Z, unabhängig voneinander optional substituiert sein kann mit Halogen, Wasserstoff, Alkyl, Heteroalkyl, Aryl, Heteroaryl, Alkenyl, und Alkynyl, wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
R, R' und R" unabhängig voneinander ausgewählt sind aus Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
A, B, C, X, Y, Z ausgewählt sind aus O, B, C, N;
M ausgewählt ist aus Pt(II), Pd(II), Au(III), Ag(III), Rh(I) und Ir(I); und
L ausgewählt ist aus Phosphan, Arsan, Stiban, Bismuthan, Azol, Azin, Acetylid, Isonitril, Carben, Halogen und Nitril;
als Mittel zum Färben von Polymerfilmen, Nano- und Mikropartikeln und zur Markierung von Zellen, Zellbausteinen und Makromolekülen, Nano- und Mikropartikeln, **dadurch gekennzeichnet, dass**
• die d8-Metallkomplexverbindung als Monomer oder als Aggregat oder einer Mischung aus Monomeren und Aggregaten, vorliegt;
• die Monomere der d8-Metallkomplexverbindung lumineszente Lebensdauern im Bereich von 1 µs bis 300 µs, vorzugsweise im Bereich von 5 µs bis 100 µs, besonders bevorzugt im Bereich von 5 bis 50 µs aufweisen; und/oder dass die Aggregate der d8-Metallkomplexverbindung lumineszente Lebensdauern im Bereich von 1 µs bis 50 µs, vorzugsweise im Bereich von 5 µs bis 30 µs, besonders bevorzugt unterhalb von 10 µs aufweisen; und
• d8-Metallkomplexverbindung eine quadratisch planare Koordination aufweist.

2. Verwendung nach Anspruch 1, **dadurch gekennzeichnet, dass** die Monomere der d8-Metallkomplexverbindung eine Lichtabsorption von Wellenlängen von 450 nm oder weniger, vorzugsweise von 420 nm oder weniger, besonders bevorzugt von 400 nm aufweisen und/oder dass die Aggregate der d8-Metallkomplexverbindung eine Lichtabsorption von Wellenlängen unterhalb von 500 nm oder weniger, vorzugsweise von 450 nm oder weniger, besonders bevorzugt von 420 nm aufweisen.

3. Verwendung nach einem der Ansprüche 1 oder 2, **dadurch gekennzeichnet, dass** die Monomere der d8-Metallkomplexverbindung eine Lichtemission von Wellenlängen im Bereich von 430 nm bis 650 nm, vorzugsweise von 450 nm bis 550 nm aufweisen und/oder dass die Aggregate der d8-Metallkomplexverbindung eine Lichtemission von Wellenlängen im Bereich von 600 nm bis 800 nm, vorzugsweise 600 nm bis 700 nm aufweisen.

4. Verwendung nach einem der vorherigen Ansprüche, **dadurch gekennzeichnet, dass** die Lumineszenz der Monomere durch Sauerstoff gelöscht werden kann; oder dass die Lumineszenz der Aggregate durch Sauerstoff nicht oder nur minimal beeinflussbar ist.

5. Verwendung nach Anspruch 4, **dadurch gekennzeichnet, dass** die lumineszente Lebensdauer der Monomere in Abhängigkeit von der Sauerstoffkonzentration im Bereich von 300 µs in Abwesenheit von Sauerstoff bis hin zu 10 ns, vorzugsweise von 50 µs bis hin zu 50 ns, besonders bevorzugt im Bereich von 10 µs bis hin zu 50 ns in Anwesenheit von Triplett-Sauerstoff gesteuert werden kann.

6. Verwendung nach einem der Ansprüche 4 oder 5, **dadurch gekennzeichnet, dass** die Monomere der d8-Metallkomplexverbindung eine Quantenausbeute in Abwesenheit von Sauerstoff von bis zu 90 % und in Anwesenheit von Sauerstoff von unterhalb 1 % aufweisen und/oder dass die Aggregate der d8-Metallkomplexverbindung eine von Sauerstoff unabhängige Quantenausbeute von 30 bis 60 %, vorzugsweise 35 bis 45 % aufweisen.

7. Verwendung nach einem der vorherigen Ansprüche, **dadurch gekennzeichnet, dass** die d8-Metallkomplexverbindung eine Verbindung der allgemeinen Formel (1a) ist: 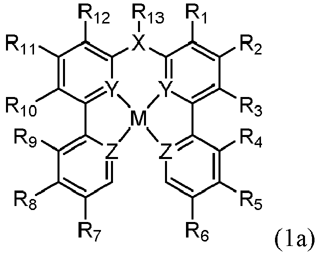 wobei
R₁ bis R₁₃ unabhängig voneinander ausgewählt sind aus Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
X, Y, Z ausgewählt sind aus O, B, C, N;
M ausgewählt ist aus Pt(II), Pd(II), Au(III), Ag(III), Rh(I) und Ir(I);
oder dass die d8-Metallkomplexverbindung eine Verbindung der allgemeinen Formel (2a) ist:
Formel (II) 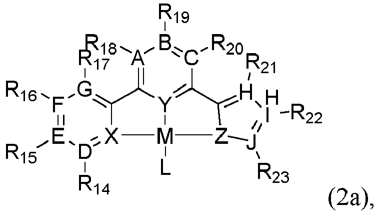 wobei
R₁₄ bis R₂₃ unabhängig voneinander ausgewählt sind aus Halogen, Wasserstoff, Alkyl, Heteroalkyl, Aryl, Heteroaryl, Alkenyl, und Alkynyl; wobei Alkyl, Heteroalkyl, Aryl, Heteroaryl, Alkenyl, und Alkynyl unanbhängig voneinander unsubstituiert oder mit einem oder mehreren Substituenten weiter substituiert sein können;
A, B, C, D, E, F, G, H, I, J, X, Y, Z ausgewählt sind aus O, B, C, N;
M ausgewählt ist aus Pt(II), Pd(II), Au(III), Ag(III), Rh(I) und Ir(I); und
L ausgewählt ist aus Phosphan, Arsan, Stiban, Bismuthan, Azol, Azin, Acetylid, Isonitril, Halogen, Carben, und Nitril.

8. Verwendung nach einem der vorherigen Ansprüche, **dadurch gekennzeichnet, dass** die d8-Metallkomplexverbindung eine Verbindung ist, die ausgewählt ist aus den Verbindungen 1 bis 55:
| Nr. | Struktur |
|---|---|
| 1 | 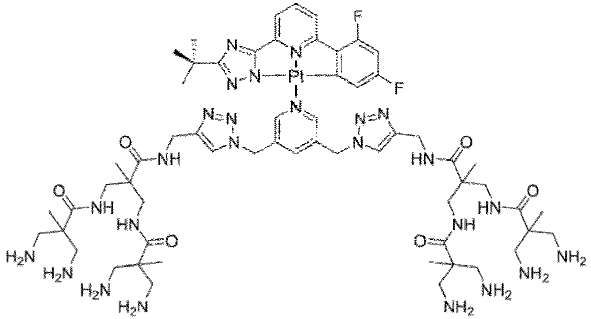 |
| 2, 3 | 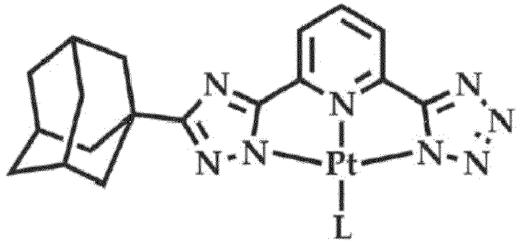 |
| | 2: L is PPh₃ |
| | 3: L is 4-C₅H₁₁-py |
| 4 | 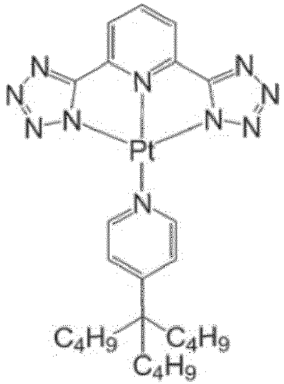 |
| 5-13 | 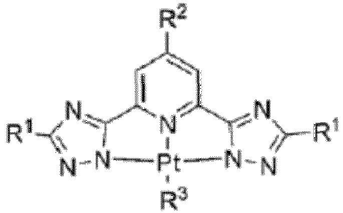 |
| | 5: R¹ = CF₃; R² = H, R³ = 4-Amylpyridin |
| | 6: R¹ = tBu; R² = H, R³ = 4-Amylpyridin |
| | 7: R¹ = *t*Bu; R² = OMe, R³ = 4-Amylpyridin |
| | 8: R¹ = CF₃; R² = OMe, R³ = 4-Amylpyridin |
| | 9: R¹ = CF₃; R² = H, R³ = P(phenyl)₃ |
| | 10: R¹ = *t*Bu; R² = H, R³ = P(phenyl)₃ |
| | 11: R¹ = *t*Bu; R² = OMe, R³ = P(phenyl)₃ |
| | 12: R¹ = CF₃; R² = OMe, R³ = P(phenyl)₃ |
| | 13: R¹ = Ph; R² = OMe, R³ = P(phenyl)₃ |
| 14-17 | 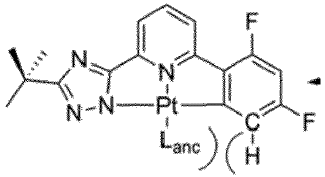 |
| | 14: L_{anc} = P(phenyl)₃, |
| | 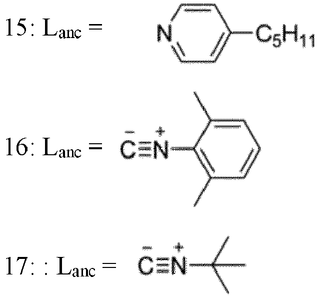 |
| 18-21 | 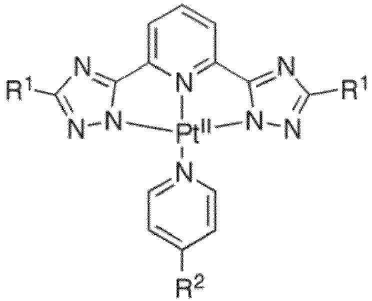 |
| | 18: R¹ = Adamantyl, R² = C₅H₁₁ |
| | 19: R¹ = Adamantyl, R² = C(C₄H₉)₃ |
| | 20: R¹ = Toluenyl, R² = C₅H₁₁ |
| | 21: R¹ = Toluenyl, R² = C(C₄H₉)₃ |
| 22-28 | 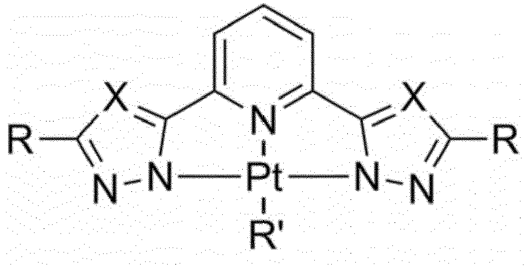 |
| | 22: R = Adamantyl, R' = PPh₃, X = N; |
| | 23: R = Adamantyl, R' = NHC, X = N; |
| | 24: R = Adamantyl, R' = C₅H₁₁PY, X = N; |
| | 25: R = Toluenyl, R' = C₅H₁₁Py, X = N; |
| | 26: R = Adamantyl, R' = C₅H₁₁PY, X = C; |
| | 27: R = Adamantyl, R' = PPh₃, X = C; |
| | 28: R = Toluenyl, R' = PPh₃, X = C. |
| 29 | Pyridin 2,6-bis(3-(Trifluoromethyl)-1,2,4-Triazolato-5-yl)Pyridin Platin(II) |
| 30 | 4-Pentyl-Pyridin 2,6-bis(3-(Trifluoromethyl)-1,2,4-Triazolato-5-yl)Pyridine Platinum(II) |
| 31 | 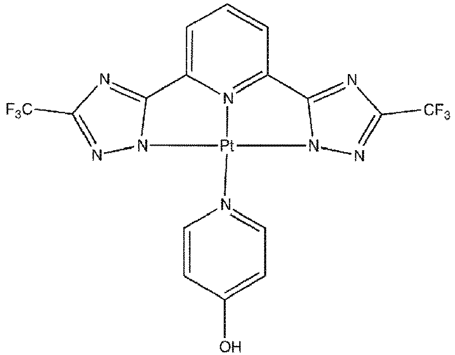 |
| 32 | 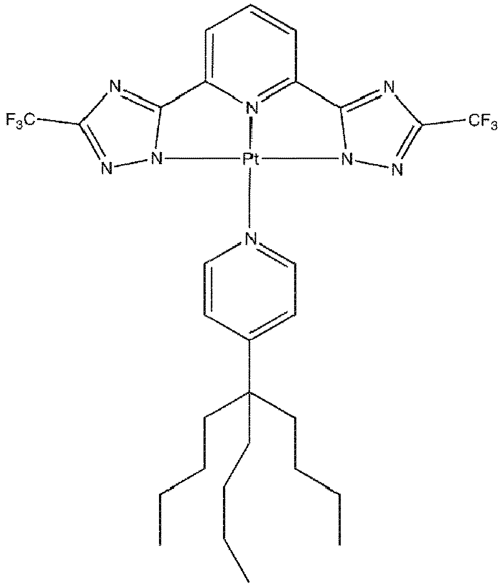 |
| 33 | 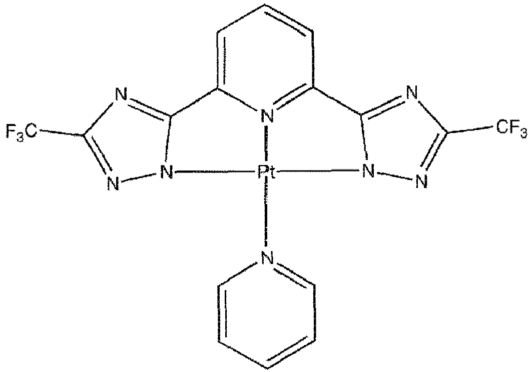 |
| 34 | 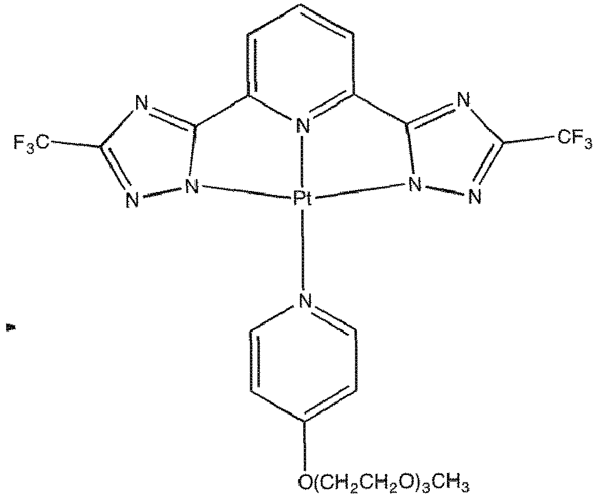 |
| 35 | 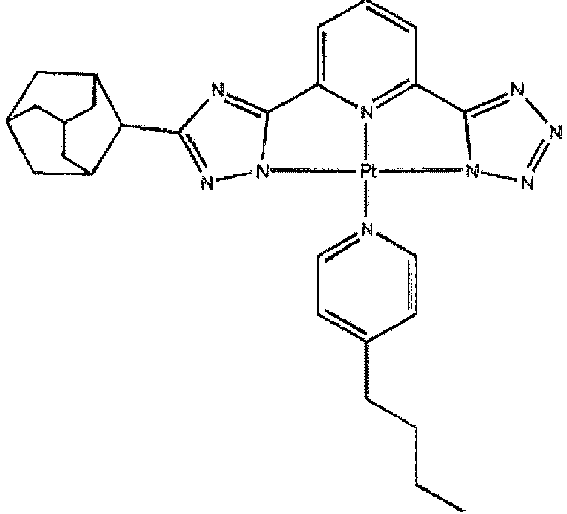 |
| 36 | 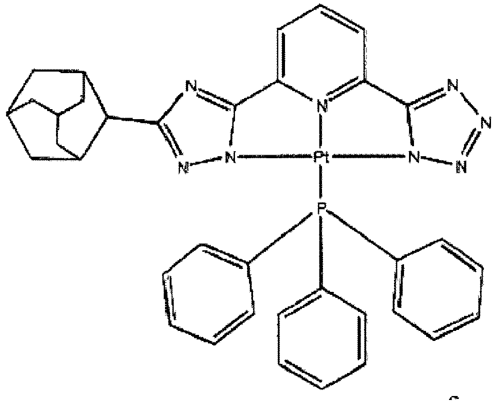 |
| 37 | 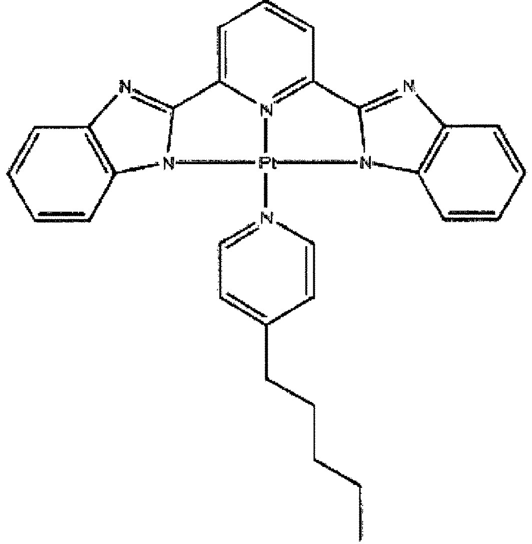 |
| 38 | 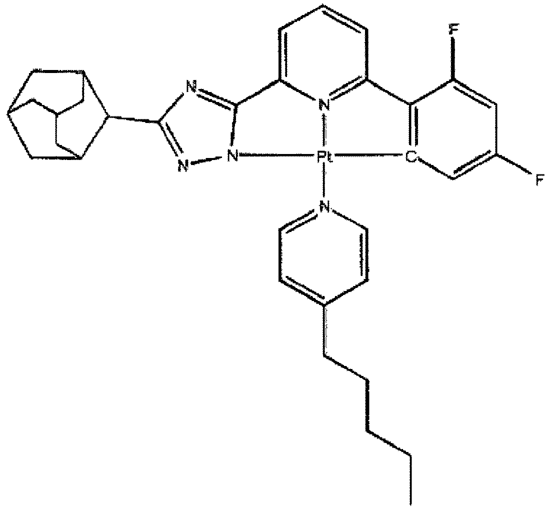 |
| 39 | 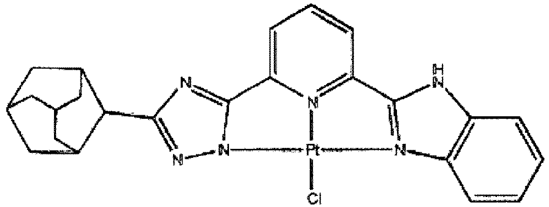 |
| 40 | 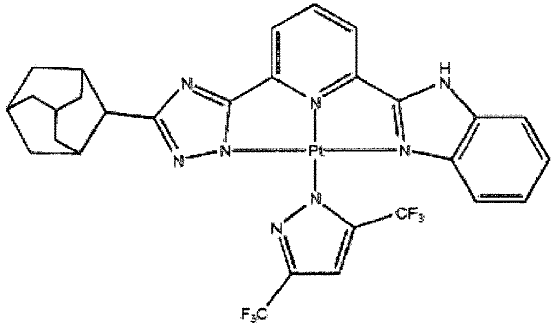 |
| 41, 42 | 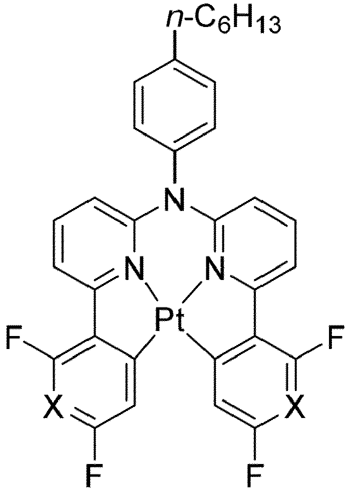 |
| | 41: X = CH |
| | 42: X = N |
| 43 | 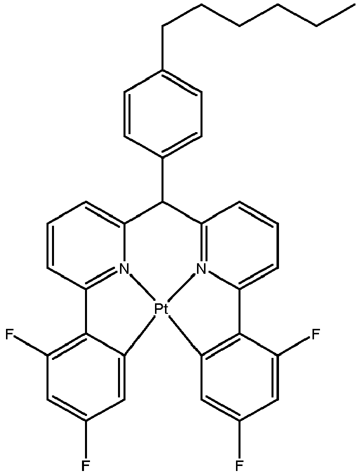 |
| 44 | 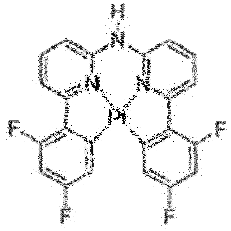 |
| 45 | 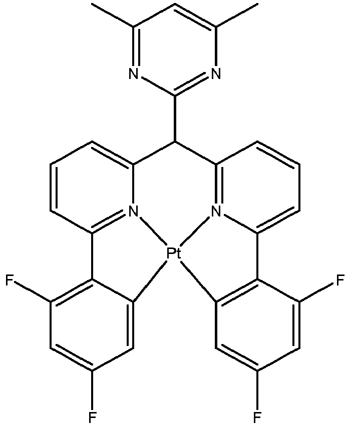 |
| 46 | 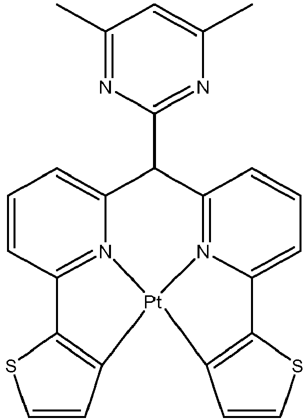 |
| 47-51 | 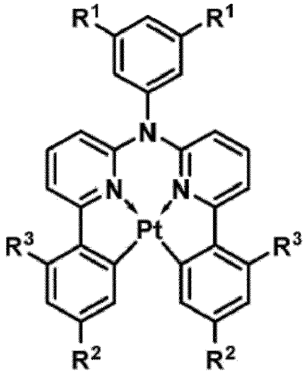 |
| | 47: R¹ = CH₃O, R² = H, R³ = H |
| | 48: R¹ = CH₃O, R² = F, R³ = H |
| | 49: R¹ = CH₃O, R² = F, R³ = F |
| | 50: R¹ = H, R² = H, R³ = H |
| | 51: R¹ = H, R² = F, R³ = F |
| 52 | 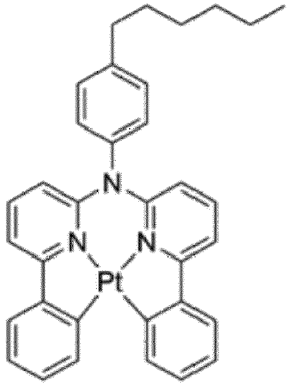 |
| 53 | 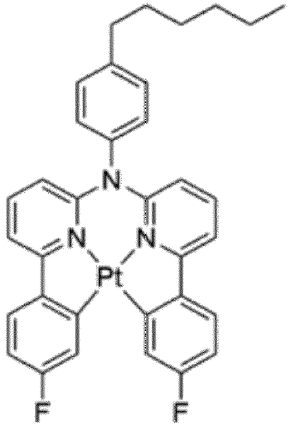 |
| 54 | 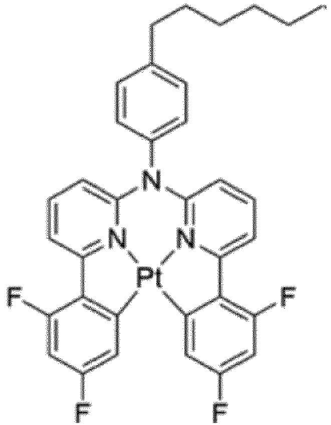 |
| 55 | 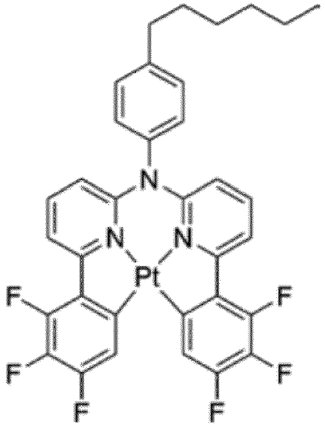 |
und aus den Verbindungen PtL1, PtL3, PdL1 und PdL3:

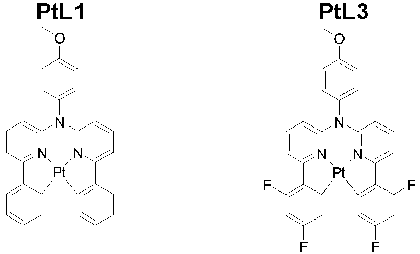

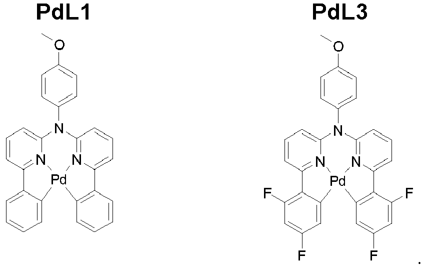

9. Verwendung nach einem der Ansprüche 1 bis 8, **dadurch gekennzeichnet, dass** die d8-Metallkomplexverbindung in Nano- oder Mikropartikeln eingekapselt ist, wobei die Nano- oder Mikropartikeln ausgewählt sind aus Micellen, Liposomen, Polymerpartikeln, Silika-Partikeln und Schichtsilikaten wie Nanoclays.
wobei die d8-Metallkomplexverbindung in den Nano- oder Mikropartikeln als Monomer oder als Aggregat oder einer Mischung aus Monomeren und Aggregaten vorliegt.

10. Verwendung der d8-Metallkomplexverbindung oder der Nano- oder Mikropartikel enthaltend mindestens eine solche d8-Metallkomplexverbindung nach einem der vorherigen Ansprüche
• zum Nachweis von Enzymen, des pH Wertes oder Verbindungen wie Glutathion sowie von Peptiddegradationsprozessen und Deaggregationsprozessen von Molekülaggregaten und d8-Komplex-markierten Makromolekülen und partikulären Trägermaterialien oder der Prozessierung dieser Materialien in Zellen (unter Freisetzung der monomeren d8-Metallkomplexe), **dadurch gekennzeichnet, dass** eine Farbänderung der Lumineszenz-Emission der d8-Metallkomplexverbindung durch einen Wechsel des Aggregationszustandes der d8-Metallkomplexverbindung vom Monomer zu einem Aggregat oder umgekehrt erfolgt; oder
• als Reporter oder Sensoren für Lumineszenz-basierte Messtechniken und MS-basierte Messtechniken und die Kombination dieser Methoden; oder
• zur Herstellung von spektralen Intensitäts- und Lebensdauer-Codes für Multiplexing und Barcoding-Applikationen; oder
• zur Herstellung von selbst-referenzierten Sensor-Systemen, wie beispielsweise für den Nachweis von Sauerstoff; oder
• zum Design von aktivierbaren Sonden, wobei in Anwesenheit eines Analyten eine Aggregation oder eine Deaggregation erfolgen kann, wobei sich Monomore und Aggregate in ihren optischen Eigenschaften (Absorptionsspektren, Extinktionskoffizienten, Lumineszenzspektren, Lumineszenzquantenausbeuten, Lumineszenzlebensdauern, Sauerstoffsensitivität) stark unterscheiden; oder
• zur Funktionsgruppenanalytik von Nano- und Mikropartikeln, wobei die d8-Metallkoplexverbindungen als multimodale Sonden eingesetzt werden.

11. Verfahren zur Herstellung von mit lumineszenten d8-Metallkomplexverbindungen, wie in den Ansprüchen 1 bis 8 definiert, beladenen Nano- oder Mikropartikeln, umfassend die Schritte
a) Dispergieren der Nano- oder Mikropartikel in einem flüssigen Medium, vorzugsweise in Wasser oder einer Pufferlösung;
b) Lösen mindestens einer d8-Metallkomplexverbindung gemäß einem der Ansprüche 1 bis 13 in einem geeigneten organischen Lösungsmittel;
c) Zugeben der die mindestens eine d8-Metallkomplexverbindung enthaltende Lösung zu der Dispersion der Nano- oder Mikropartikeln gemäß Schritt a) und mischen der Bestandteile;
d) Schrumpfen der Partikel durch weitere Zugabe des flüssigen Medium gemäß Schritt a), vorzugsweise in Wasser oder einer Pufferlösung, wodurch die mindestens eine d8-Metallkomplexverbindung in den Nano- oder Mikropartikel eingekapselt wird.

12. Verfahren nach Anspruch 11, weiterhin umfassend die Präzipitation der in Schritt d) gewonnenen, mit mindestens einer d8-Metallkomplexverbindung beladenen Nano- oder Mikropartikel, das anschließende Waschen der beladenen Nano- oder Mikropartikel und das Verdünnen der gewaschenen beladenen Nano- oder Mikropartikel auf eine gewünschte Konzentration.

13. Nano- oder Mikropartikel, die mit mindestens einer d8-Metallkomplexverbindung gemäß den Ansprüchen 1 bis 8 beladen sind, erhältlich mit dem Verfahren nach Anspruch 11 oder 12.

14. Eine d8-Metallkomplexverbindung ausgewählt aus einer der Verbindungen PtL1, PtL3, PdL1 und PdL3:
